# FASCICULE DE BREVET EUROPEEN

(11) **EP 1 049 971 B1**
(45) Date de publication et mention de la délivrance du brevet: **15.06.2005**
(21) Numéro de dépôt: 99950861.7
(22) Date de dépôt: 28.10.1999
(51) Int. Cl.: G06F 9/44

(54) **PROCEDE DE COMMANDE D'UNE FONCTION EXECUTABLE PAR DES COMMANDES SPECIFIQUES A DES LOGICIELS DIFFERENTS**
VERFAHREN ZUR STEUERUNG EINER AUSFÜHRBAREN FUNKTION DURCH FÜR UNTERSCHIEDLICHE SOFTWARE SPEZIFISCHE BEFEHLE
METHOD FOR CONTROLLING A FUNCTION EXECUTABLE BY SPECIFIC COMMANDS TO DIFFERENT SOFTWARE TOOLS

(30) Priorité: 30.10.1998 FR 9813645
(43) Date de publication de la demande: 08.11.2000
(73) Titulaire: BULL S.A., 78434 Louveciennes Cedex (FR)
(72) Inventeur: NACHEF, Armand, F-78180 Montigny le Bretonneux (FR); SITBON, Gérard, F-75014 Paris (FR); RAVON, Jean-Michel, F-78210 Saint-Cyr l'Ecole (FR)
(86) Numéro de dépôt international: PCT/FR1999/002629
(87) Numéro de publication internationale: WO 2000/026774

(56) Documents cités:
- WO-A-96/37825
- OSAMU MIKAMI ET AL: "HETEROGENEOUS COMPUTING ENVIRONMENT "COUPLE"" NEC RESEARCH AND DEVELOPMENT, vol. 32, no. 1, 1 janvier 1991 (1991-01-01), pages 130-141, XP000229428 ISSN: 0547-051X
- SHOWMAN P S: "AN OBJECT-BASED USER INTERFACE FOR THE HP NEWWAVE ENVIRONMENT" HEWLETT-PACKARD JOURNAL, vol. 40, no. 4, 1 août 1989 (1989-08-01), pages 9-17, XP000094705

## Description

### Domaine technique.

L'invention a pour objet un procédé de commande d'une fonction exécutable par des commandes spécifiques à des logiciels différents dans un système informatique. Elle convient à tout système et est plus particulièrement adaptée à un système très hétérogène.

### L'art antérieur.

Le système informatique d'une société est souvent hétérogène, en raison de l'évolution historique du système et des disponibilités du marché. Dans un système informatique se trouvent un ou plusieurs serveurs supportant plusieurs applications. L'hétérogénéité peut être due au fait que les serveurs ont des systèmes d'exploitation différents les uns des autres. Par exemple, l'un des serveurs peut être un système fermé, spécifique d'un constructeur donné et fonctionnant avec un système d'exploitation (Operating System) propre au constructeur, tandis que les autres serveurs peuvent être des systèmes ouverts fonctionnant avec des systèmes d'exploitation différents entre eux, tels que ceux connus sous les marques déposées UNIX et Windows NT. Chaque système d'exploitation possède des commandes spécifiques, écrites dans un langage spécifique. Par conséquent, l'exploitation d'un système informatique requiert l'emploi de commandes propres à chaque système d'exploitation et la connaissance de leurs langages.

L'hétérogénéité peut aussi provenir des applications. Plusieurs applications différentes entre elles peuvent avoir des parties fonctionnelles analogues exécutables au moyen d'interfaces de commande différentes entre elles. Par exemple, deux logiciels aussi différents qu'un logiciel de comptabilité et un logiciel de gestion de base de données ont en commun la fonction d'impression de documents alors que leurs commandes sont tout à fait différentes.

Un utilisateur, que ce soit un administrateur ou un responsable d'exploitation du système informatique, doit donc connaître les différentes commandes des différents systèmes d'exploitation et des différents logiciels d'application. L'utilisateur doit donc avoir à la fois une solide formation relative à chaque système et chaque application et une bonne pratique pour les exploiter vite et efficacement. En outre, les systèmes d'exploitation et surtout les applications évoluent très vite et nécessitent une formation régulière des utilisateurs et un usage permanent des différents systèmes et applications. Les applications ayant des fonctions de plus en plus nombreuses et plus riches, le temps d'apprentissage est plus long. Les utilisateurs disposent souvent d'une documentation d'aide en ligne. Cependant, la documentation est aussi spécifique et évolutive, et elle est d'un emploi très lourd, surtout si les informations d'aide nécessitent l'ouverture et la lecture de plusieurs fenêtres successives.

### Sommaire de l'invention.

Un but de l'invention est d'offrir dans un système informatique une commande commune à toutes les commandes représentatives d'une même fonction et spécifiques à divers logiciels, tels que des systèmes d'exploitation ou des applications.

Une commande de ce type impliquant un procédé de traduction est décrite dans le document OSAMU MIKAMI ET AL: "HETEROGENEOUS COMPUTING ENVIRONMENT "COUPLE" NEC RESEARCH AND DEVELOPPENT, vol. 32, no. 1, 1 janvier 1991, pages 130-141, XP000229428

L'invention a pour objet un procédé de commande d'une fonction exécutable par divers logiciels sous des commandes spécifiques aux logiciels respectifs et pouvant avoir chacune au moins une option, les logiciels étant installés dans au moins une machine d'un système informatique, caractérisé en ce qu'il consiste à définir dans une classe abstraite une méthode abstraite pour la fonction, la méthode abstraite incluant des paramètres correspondant à l'union, au sens logique, de toutes les options des commandes spécifiques, à définir une commande commune incluant des symboles arbitraires correspondant aux paramètres de la méthode abstraite, à former au moins un pilote pour implémenter la méthode abstraite dans une machine, et à faire exécuter par le pilote l'une des commandes spécifiques avec des options équivalant aux options de la commande commune.

L'invention a pour objet corollaire un système informatique comprenant au moins un machine disposant de logiciels divers ayant en commun au moins une fonction exécutable sous des commandes spécifiques aux logiciels respectifs et pouvant avoir chacune au moins une option, caractérisé en ce qu'il met en oeuvre le procédé défini précédemment.

L'invention a aussi pour objet corollaire un support d'enregistrement, tel qu'une disquette magnétique ou un cédérom, incorporant un logiciel pour la mise en oeuvre du procédé.

Les caractéristiques et avantages de l'invention ressortent de la description qui suit, donnée à titre d'exemple et faite en référence aux dessins annexés.

### Présentation des dessins.

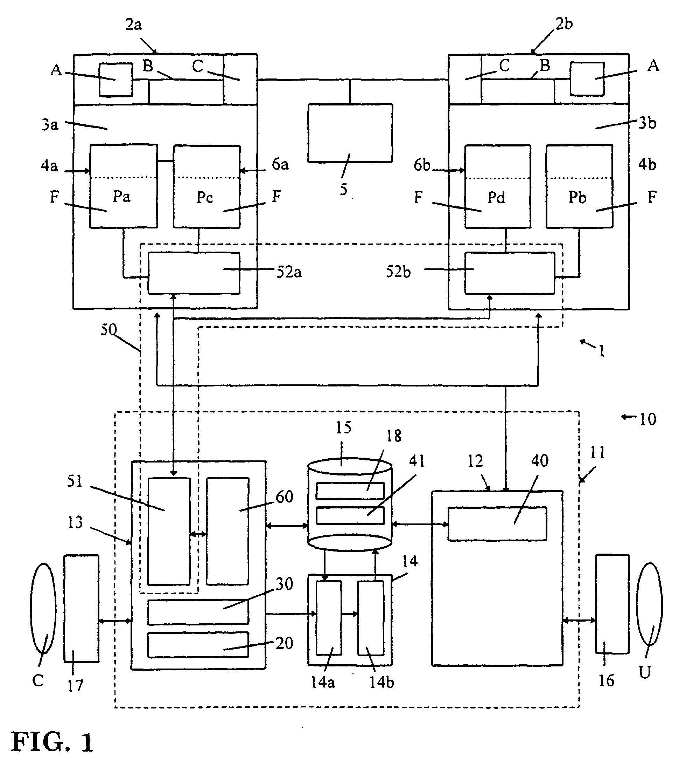

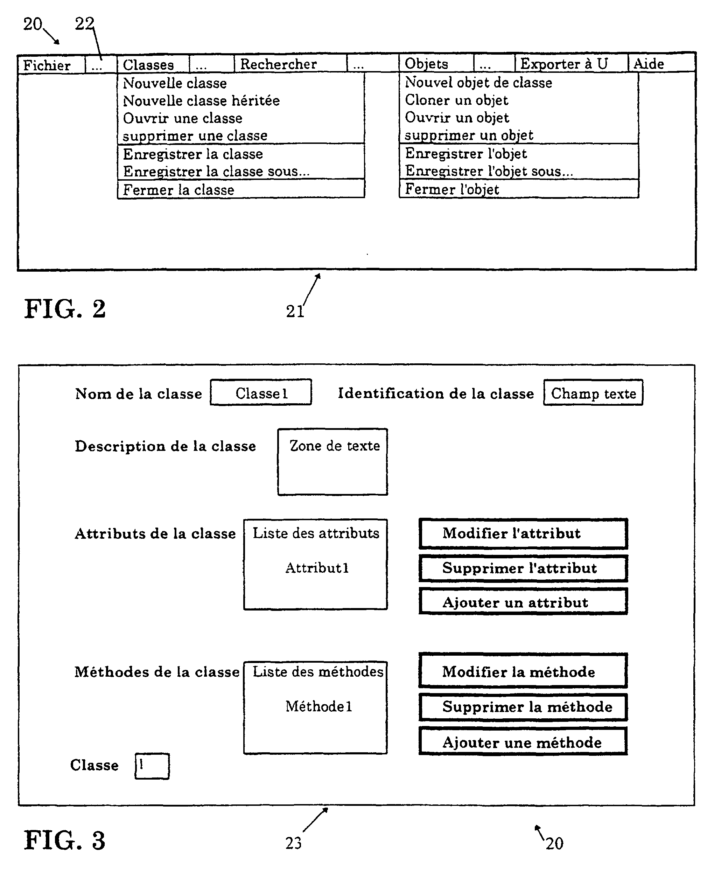

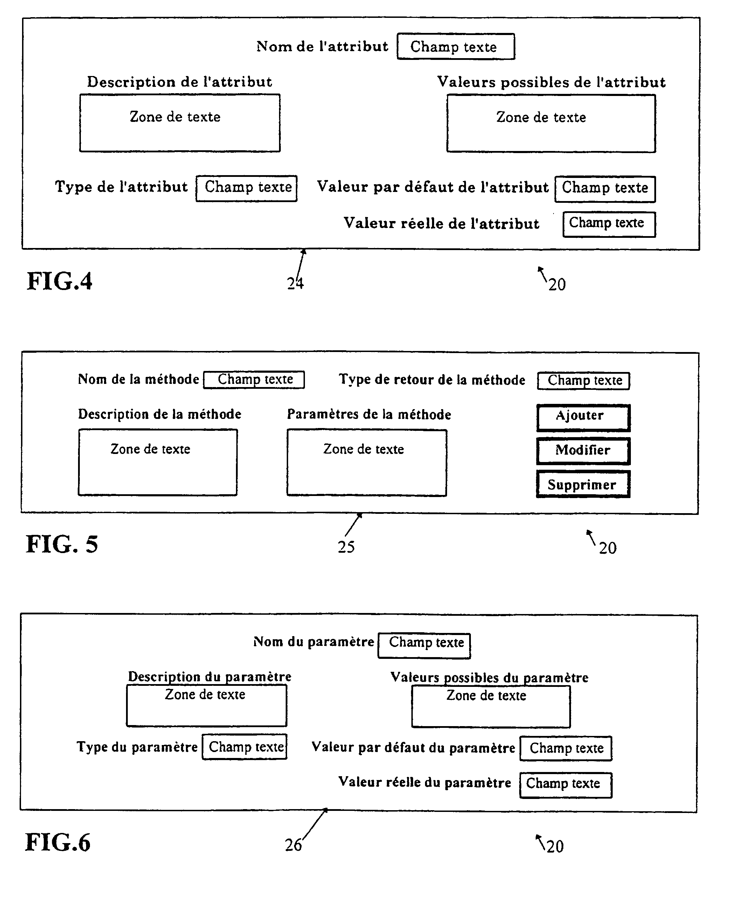

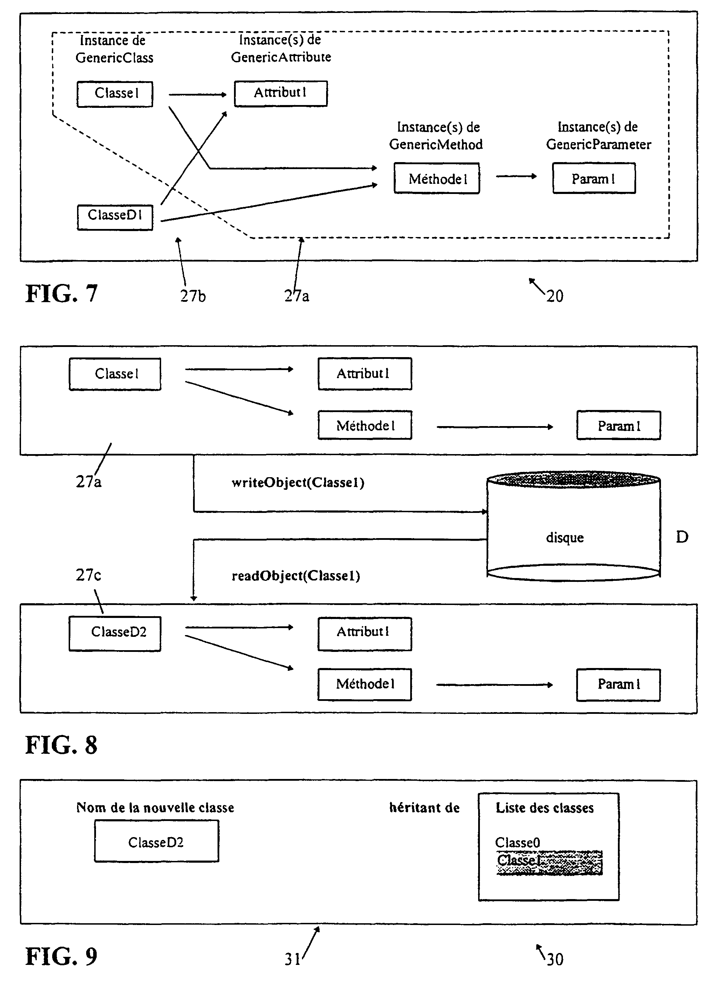

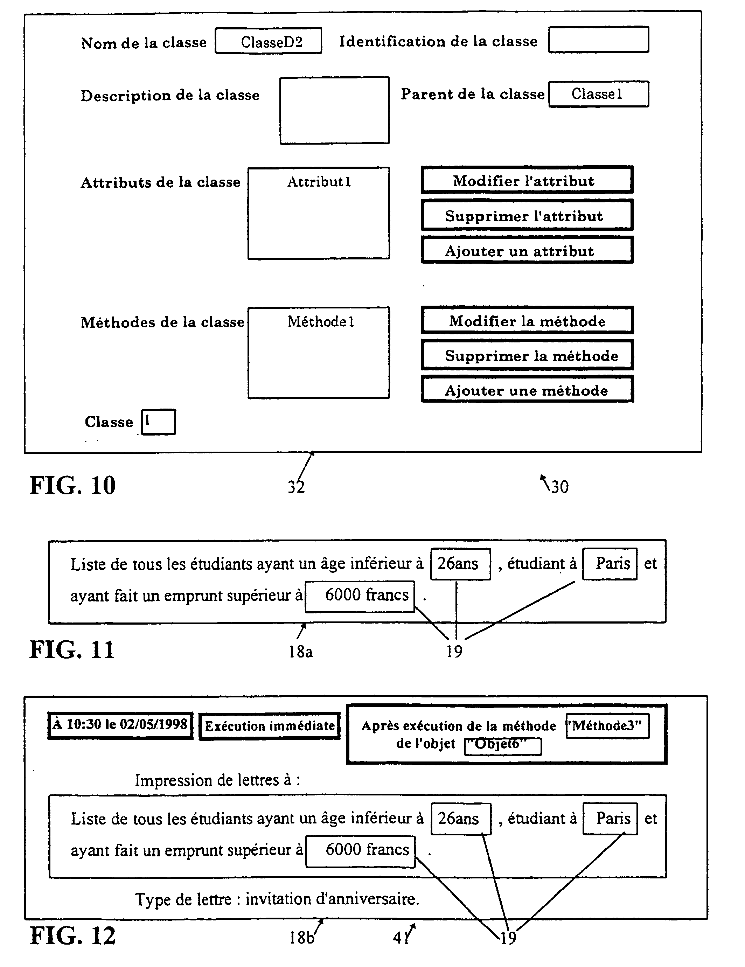

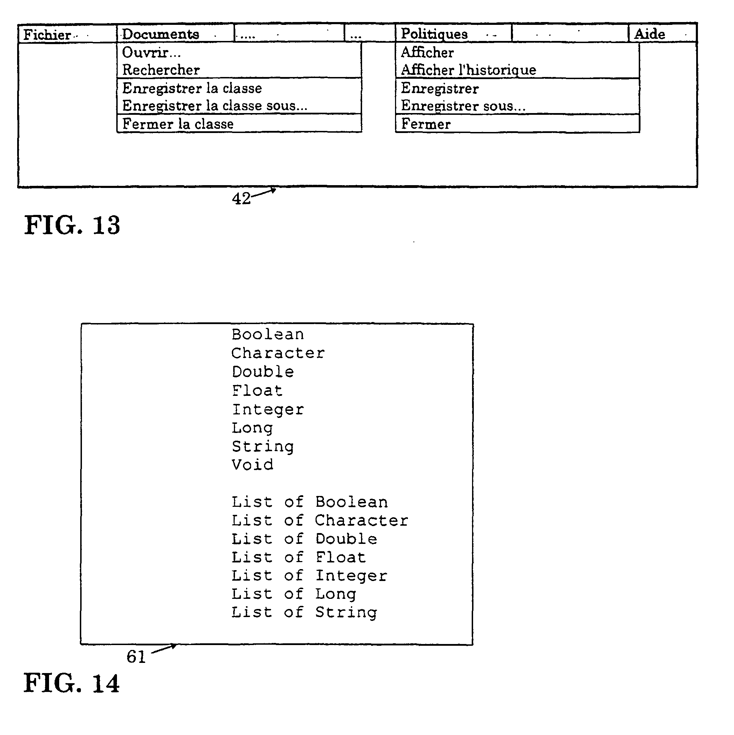

◆ La figure 1 est une vue synoptique d'un système informatique mettant en oeuvre le procédé de l'invention.
◆ La figure 2 est une fenêtre servant à un concepteur pour la mise en oeuvre du procédé de l'invention.
◆ La figure 3 est une boîte de dialogue servant au concepteur pour créer dynamiquement une classe pour l'exploitation désirée du système par l'utilisateur.
◆ La figure 4 est une boîte de dialogue servant au concepteur pour définir un attribut de la classe présentée dans la figure 3.
◆ La figure 5 est une boîte de dialogue servant au concepteur pour définir une méthode de la classe présentée dans la figure 3.
◆ La figure 6 est une boîte de dialogue servant au concepteur pour définir un paramètre d'une méthode définie dans la figure 5.
◆ La figure 7 est une vue synoptique de la structure en arbre de la classe telle que définie au moyen des boîtes de dialogue présentées dans les figures 3 à 6.
◆ La figure 8 est une vue synoptique illustrant un procédé de dérivation de la classe présentée dans la figure 7.
◆ Les figures 9 et 10 sont des boîtes de dialogue servant au concepteur pour définir la classe dérivée en utilisant le procédé illustré dans la figure 8.
◆ Les figures 11 et 12 illustrent deux interfaces respectives servant à l'utilisateur pour la commande du système représenté sur la figure 1.
◆ La figure 13 est une fenêtre présentée à l'utilisateur pour l'utilisation des interfaces illustrées dans les figures 1, 11 et 12.
◆ La figure 14 est une boîte de dialogue servant au concepteur à la génération automatique dans un langage orienté objet d'un pilote d'implémentation d'une méthode abstraite d'une classe abstraite pour l'exécution d'une commande spécifique dans le système de la figure 1.

### Description détaillée d'exemples illustrant l'invention.

La figure 1 illustre un système d'information 10 exploité par un utilisateur U par l'intermédiaire d'une interface de commande 11. Le système 10 peut être un système quelconque. Le système 10 illustré inclut un ensemble informatique 1 comprenant au moins une machine, deux machines 2a et 2b dans l'exemple illustré. Chaque machine illustrée a, de façon bien connue, au moins un processeur A connecté par l'intermédiaire d'un bus B à une mémoire 3. D'une manière générale, la mémoire peut être locale ou distribuée, ou les machines peuvent former des noeuds d'un réseau dans l'ensemble 1. Dans chaque mémoire 3 sont stockés des moyens logiciels, notamment un ou plusieurs systèmes d'exploitation 4. Afin de mieux mettre en relief les avantages de l'invention, il sera considéré comme un système hétérogène représentatif d'un cas difficile à gérer. Les deux machines 2 sont supposées fonctionner sous deux systèmes d'exploitation respectifs 4a et 4b de types ou de versions différents l'un de l'autre, par exemple un système d'exploitation du type propriétaire et un système d'exploitation de type ouvert, par exemple celui connu sous l'un des noms de marque déposée UNIX ou Windows NT. L'ensemble informatique 1 dispose aussi de moyens de base de données, appelés base de données 5 et pouvant être constitués d'une ou plusieurs bases de données locales ou distantes. Les machines 2 ont aussi chacune une interface d'entrée-sortie C connectée au bus B. Les interfaces d'entrée-sortie C des deux machines sont interconnectées entre elles ainsi qu'à la base de données C.

L'interface de commande 11 comprend un module de commande 12, un module de conception 13, un générateur 14 d'interfaces et une base d'interface 15. Le module 12 est connecté de façon bidirectionnelle à l'ensemble informatique 1. Le module 13 peut aussi être connecté de la même façon à l'ensemble informatique 1. La base d'interface 15 est connectée de façon bidirectionnelle aux modules 12 et 13 et au générateur 14. Le générateur 14 est aussi connecté pour être commandé par le module 13. Le module de commande 12 sert à l'utilisateur U pour commander et exploiter les données du système 10. Le module de conception 13 sert à un concepteur C, qui est un autre utilisateur de l'interface 11 mais qui est un spécialiste en informatique. Les deux utilisateurs U et C ont des consoles respectives 16 et 17 attachées aux modules respectifs 12 et 13.

En bref, l'utilisateur U définit des besoins pour connaître et améliorer le fonctionnement de l'entreprise et soumet ses besoins au concepteur C. Le concepteur C crée au moyen de son module 13 des objets logiciels répondant aux besoins de l'utilisateur U et les envoie au générateur 14 pour être converties en interfaces 18 (figures 11 et 12) correspondant à ses besoins et exprimant les commandes du système en un langage qui lui est compréhensible. Ces interfaces servent à l'utilisateur pour former des documents et seront appelées interfaces documentaires.

L'utilisateur U sera par exemple un directeur d'agence bancaire non spécialisé en informatique. On suppose par exemple que l'utilisateur U désire consulter l'ensemble informatique 1 de la banque pour faire des requêtes en vue d'obtenir une liste d'étudiants, clients de l'agence, et imprimer pour eux des lettres personnalisées d'information, d'invitation et de rappel. L'utilisateur U transmet ses besoins au concepteur C, par exemple lors d'une réunion entre eux. Le concepteur transcrit ces besoins en utilisant, dans une première étape, le module 13 pour créer, modifier et/ou supprimer des objets et des classes d'objets concernés par ces besoins. Par exemple, afin de satisfaire au besoin précité de l'utilisateur U, le concepteur C créera une classe impression avec : un premier attribut "liste de diffusion" selon un ensemble de critères, ici les étudiants de l'agence ; un second attribut "nombre d'exemplaires" (entier) ; une première méthode "imprimer" ayant comme paramètre l'imprimante destinataire ; et une seconde méthode "visualiser les opérations d'impression" pour connaître le déroulement de l'impression. Les objets et classes créés par le concepteur sont stockés dans la base d'interface 15. La transcription finale par le concepteur C des besoins de l'utilisateur U n'est contenue que dans des objets qui ont été directement créés précédemment ou qui sont des instances de classes définies précédemment. Ces objets sont contenus dans la base 15, qui est contenue dans l'interface de commande 11 dans l'exemple illustré mais qui pourrait être extérieure à l'interface 11 et incluse dans l'ensemble informatique 1. Les objets sont convertis en interfaces documentaires présentées à l'utilisateur U pour lui servir à former des documents de commande satisfaisant à ses besoins.

Le module 13 va d'abord être présenté. Il met en oeuvre deux outils logiciels 20 et 30 exécutant respectivement un procédé de création dynamique de classes et un procédé de dérivation de classes et objets. L'outil 20 de création dynamique de classes va maintenant être présenté.

La figure 2 illustre un exemple d'écran 21 qu'affiche la console 17 pour servir d'interface entre le concepteur C et le module 13. L'écran 21 a une barre 22 de menus incluant notamment les menus "Classes", "Objets", "Rechercher" et "Exporter à U". Le menu "Classes" permet de créer dynamiquement des classes d'objets, par héritage ou non. Il permet aussi d'ouvrir une classe pour éventuellement la modifier, l'enregistrer ou la fermer. Le menu "Objets" permet d'instancier les classes définies précédemment, afin de créer des objets qu'on peut ensuite cloner. Comme pour les classes, on peut ouvrir un objet, le modifier, l'enregistrer sur le disque et le fermer. Avec l'outil 20, le concepteur C peut définir les commandes qui se trouvent dans les deux menus tels qu'illustrés par exemple dans ceux de l'écran 21. Le menu "Classes" illustré contient les commandes "Nouvelle classe", "Nouvelle classe héritée", "Ouvrir une classe", "Supprimer une classe", "Enregistrer la classe", "Enregistrer la classe sous..." (Save the class as...) et "Fermer la classe". Le menu "Objets" contient les commandes "Nouvel objet de classe", "Cloner un objet", "Ouvrir un objet", "Supprimer un objet", "Enregistrer l'objet", "Enregistrer l'objet sous..." et "Fermer l'objet".

L'outil 20 met en oeuvre un procédé de génération dynamique d'une classe d'objets. Le procédé est déclenché automatiquement par le module de conception 13 lorsque le concepteur C active la commande "Nouvelle classe" du menu "Classes" de la fenêtre 22 de la figure 2. Le procédé de génération automatique d'une classe consiste à créer une classe générique globale "GenericClass" ayant deux membres possibles, l'un étant relatif à au moins un attribut et l'autre étant relatif à au moins une méthode , au moins l'un des deux membres étant une instance d'une classe générique, et à instancier la classe générique globale pour avoir ladite classe d'objets. Dans l'outil 20 illustré, deux classes génériques "GenericAttribute" et "GenericMethod" sont attribuées aux deux membres respectifs de la classe générique globale "GenericClass". En outre, si une méthode inclut au moins un paramètre non fixe, ce paramètre est lui même une instance d'une classe générique correspondante "GenericParameter".

D'une manière générale, les quatre classes génériques ainsi créées ne sont pas visibles par le concepteur C. Dans l'exemple illustré, elles sont mises à la disposition du concepteur C lorsqu'il exécute une commande dans les menus "Classes" et "Objets". Ainsi, une classe générique se définit comme une classe permettant au concepteur C de créer une nouvelle classe en créant une instance d'une classe générique globale. Puisque la création d'instances est dynamique dans tous les langages, la création d'une classe devient aussi dynamique pour le concepteur C. De même, sachant qu'un objet est une nouvelle instance d'une classe, la création d'un objet correspond alors aussi à la création d'une copie de cette classe, c'est-à-dire à une nouvelle instance d'une classe générique globale. Par conséquent, le procédé déclenché par l'outil 20 est aussi déclenché lorsque le concepteur C active la commande "Nouvel objet de classe" dans le menu "Objets" de la fenêtre 22 de la figure 2. Le procédé va maintenant être illustré de la façon qu'il se présente au concepteur C par l'intermédiaire de l'outil 20.

La figure 3 illustre un exemple de boîte de dialogue 23 que l'outil 20 ouvre lorsque le concepteur C clique sur la commande "Nouvelle classe" du menu "Classes". Le concepteur C utilise la boîte de dialogue 23 pour saisir toutes les données relatives à une nouvelle classe qui n'hérite pas. On sait que les données sont les attributs et les méthodes de la nouvelle classe.

La boîte 23 illustrée contient, pour la saisie des données,
- un champ de texte "Nom de la classe"
- un champ de texte "Identification de la classe (Class Id)"
- une zone de texte "Description de la classe"
- une liste "Méthodes de la classe" et
- une liste "Attributs de la classe"

La boîte 23 contient aussi les six boutons de commande encadrés en trait épais :
- "Modifier la méthode"
- "Supprimer la méthode"
- "Ajouter une méthode"
- "Modifier l'attribut"
- "Supprimer l'attribut" et
- "Ajouter un attribut".

Lorsque cette boîte de dialogue est validée, elle se traduit par la création d'une instance d'une classe générique globale, dite "GenericClass". La classe générique globale de l'exemple illustré dans la figure 3 a plusieurs attributs.

Le premier attribut est un nom, formé par une chaîne de caractères désignant le nom de la classe. Il s'écrit en remplissant le champ "Nom de la classe" de la boîte 23.

Le second attribut est une identification de la classe, formée par une chaîne de caractères permettant d'identifier de façon unique la classe ou l'objet dans le système. Cet attribut s'écrit en remplissant le champ "Identification de la classe" dans la boîte 23, par exemple in indiquant la date, l'heure de création, un nombre aléatoire formant un ticket, etc.

Le troisième attribut est une description, formée par du texte qui décrit la raison d'être de la classe. Il s'écrit en remplissant la zone "Description de la classe".

Le quatrième attribut est un tableau nommé "Attributs", qui référence les attributs de la classe. Les attributs de la classe sont eux-mêmes des instances d'une classe générique d'attributs, dite "GenericAttribute", qui a comme attributs :
- le nom de l'attribut,
- la description de l'attribut,
- soit le type de l'attribut, soit les valeurs possibles de l'attribut,
- la valeur par défaut de l'attribut, donnée à la création de la classe "GenericAttribute", et
- la valeur réelle de l'attribut, qui est invisible au concepteur C et qui n'est donc pas définie à la création de la classe. Elle est définie par l'utilisateur U de la façon décrite ultérieurement.

Par exemple, la classe "Attributs[i]" est une instance de "GenericAttribute" et référence le ième attribut de la classe définie par le concepteur C.

La figure 4 illustre une boîte de dialogue 24 de l'outil 20 constitutif du quatrième attribut de "GenericClass". Cette boîte s'ouvre à partir de la boîte 23, par exemple en nommant "Classe1" la classe issue par instanciation de la classe générique globale "GenericClass" et en activant le bouton "Ajouter un attribut". La boîte 24 contient :
- un champ de texte "Nom de l'attribut",
- une zone de texte "Description de l'attribut",
- un champ de texte "Type de l'attribut",
- une zone de texte pour "Valeurs possibles de l'attribut",
- un champ de texte "Valeur par défaut de l'attribut", et
- un champ de texte "Valeur réelle de l'attribut" représenté en grisé sur la figure 4 pour indiquer qu'il n'est pas visible par le concepteur C.

De même, pour modifier un attribut, il suffit de sélectionner l'attribut dans la liste des attributs de la figure 3 et d'activer le bouton "Modifier l'attribut", de façon à avoir la boîte de dialogue 24 de la figure 4 et à modifier les données qui apparaissent dans la boîte 24.

En tant que premier attribut, on donne à l'attribut le nom "Attribut1" et on remplit les autres champs. La validation de la boîte de dialogue 24 se traduit par la création d'une instance de la classe générique "GenericAttribute". Le nom "Attribut1" va figurer dans la liste des attributs de la figure 3, comme indiqué.

Le cinquième attribut de la classe générique "GenericClass" est un tableau nommé "Méthodes", qui référence les méthodes de la classe. Ces méthodes sont aussi, dans l'exemple illustré, des instances d'une classe générique de méthodes dite "GenericMethod". Une méthode est définie par les attributs suivants :
- son nom,
- sa description,
- son type de retour,
- ses paramètres, et
- son script d'exécution.

La figure 5 illustre une boîte de dialogue 25 de l'outil 20 constitutif du cinquième attribut de "GenericClass". Cette boîte s'ouvre à partir de la boîte 23, par exemple en activant le bouton "Ajouter une méthode". La boîte 25 contient :
- un champ de texte "Nom de la méthode",
- une zone de texte "Description de la méthode",
- un champ de texte "Type de retour de la méthode",
- une liste de "Paramètres de la méthode",
- un bouton de commande "Ajouter",
- un bouton de commande "Modifier", et
- un bouton de commande "Supprimer".

En tant que première méthode, on donne un nom à la méthode, par exemple "Méthode1", et on remplit les autres champs. La validation de la boîte de dialogue 25 se traduit par la création d'une instance de la classe générique "GenericMethod". Le nom "Méthode1" va figurer dans la liste des méthodes de la figure 3, comme indiqué.

La classe générique "GenericMethod" contient, en plus des attributs de la méthode, un tableau "Paramètres", qui référence les paramètres de la méthode. Le tableau peut être vide si la classe générique ne contient pas de paramètre à déterminer, ou peut ne pas exister si cette classe générique n'est destinée à n'avoir aucun paramètre déterminable ou si elle n'a que des paramètres fixes ou prédéterminés. Dans le tableau, les paramètres sont eux aussi des instances d'une classe générique "GenericParameter". Un paramètre d'une méthode est défini par ses attributs suivants :
- son nom,
- sa description,
- soit son type, soit ses valeurs possibles,
- sa valeur par défaut, et
- sa valeur réelle, non visible du concepteur C.

Par exemple, si le paramètre se rapporte au nombre de pages à imprimer, la valeur par défaut sera 1 mais l'utilisateur U pourra indiquer une valeur réelle autre, par exemple 3 pour avoir trois exemplaires des pages à imprimer.

La figure 6 illustre une boîte de dialogue 26 de l'outil 20 pour remplir la table de paramètres de "GenericMethod" dans la figure 5. La boîte 26 s'ouvre à partir de la boîte 25, en activant le bouton "Ajouter". La boîte 26 contient :
- un champ de texte "Nom du paramètre",
- une zone de texte "Description du paramètre",
- un champ de texte "Type du paramètre",
- une zone de texte "Valeurs possibles du paramètre",
- un champ de texte "Valeur par défaut du paramètre", et
- un champ de texte "Valeur réelle du paramètre" représenté en grisé sur la figure 5 pour indiquer que ce champ n'est pas visible du concepteur C.

En tant que premier paramètre, on lui donne par exemple le nom "Param1" et on remplit les autres champs. La validation de la boîte de dialogue 26 se traduit par la création d'une instance de la classe générique "GenericParameter". Le nom "Param1" va figurer dans la liste des paramètres de la figure 5.

La boîte de dialogue 23 de la figure 3 étant remplie, la classe "Classe1" est créée dynamiquement. On peut la valider en la sauvegardant avec la commande "Enregistrer la classe" ou "Enregistrer la classe sous...".

La figure 7 illustre la structure en arbre 27a de la classe "Classe1" résultant de la validation de la boîte 23. Dans la figure 7, la classe "Classe1" est une instance de la classe générique globale "GenericClass" et a un attribut "Attribut1" et une méthode "Méthode1" ayant elle-même un paramètre "Param1", qui sont tous les trois des instances de trois classes génériques respectives. Bien sûr, une autre classe, instance de la classe générique globale "GenericClass", pourrait avoir plusieurs instances de chacune des trois classes génériques "GenericAttribute", "GenericMethod" et "GenericParameter". Cette structure en arbre permet de dynamiquement modifier, ajouter et supprimer à tout moment des membres de la classe (attributs ou méthodes).

On sait qu'un objet est une instance d'une classe. L'activation de la commande "Nouvel objet de classe" dans le menu "Objets" de la fenêtre 21 de la figure 2 affiche sur la console 17 du concepteur C une boîte de dialogue (non illustrée) qui contient la liste de toutes les classes déjà définies. Le concepteur C peut en sélectionner une, qui sera la classe du nouvel objet. Dans un objet on donne éventuellement des valeurs aux attributs. Ces valeurs représenteront son identité et son état.

En outre, dans la classe générique globale "GenericClass" telle qu'elle apparaît de la figure 3 a de préférence un attribut supplémentaire consistant en un booléen "0" ou "1" indiquant si l'instance de la classe générique en cours représente une classe ou un objet. Dans l'exemple illustré, le booléen est "1" pour indiquer que le concepteur crée une classe. Le booléen se met automatiquement à la valeur correspondante en réponse à la commande "Nouvelle classe" ou "Nouvel objet de classe" qui a été actionnée par le concepteur C dans la fenêtre 22 de la figure 2. Dans l'exemple choisi, cet attribut n'est pas visible du concepteur C et est donc représenté en grisé.

D'autre part, dans la fenêtre 21 de la figure 2, le menu "Rechercher" est très utile au concepteur C pour faire une recherche puissante dans la base 15 pour y trouver des classes et des objets créés selon une liste de critères qu'il définit. Le concepteur C peut, par exemple, créer une nouvelle classe par héritage à partir de la classe qu'il a trouvée, au lieu de partir de zéro et refaire un travail déjà accompli.

Plus généralement, les boîtes de dialogue 23-26 servent donc au concepteur pour générer respectivement la classe générique globale et les classes génériques qui peuvent la composer. Bien que les boîtes de dialogue illustrées définissent complètement ces classes, tous les attributs, les types, les champs et zones de texte illustrés ne sont pas nécessaires. En particulier, les descriptions sont illustrées à une fin autre que le procédé de génération automatique de classes qui vient d'être décrit.

La description va maintenant porter sur l'outil 30 de dérivation d'une classe ou d'un objet, l'outil 30 étant contenu dans le module 13 de l'interface de commande 11 de la figure 1.

L'héritage avec la commande "Nouvelle classe héritée", l'instanciation avec la commande "Nouvel objet de classe" et le clonage avec la commande "Cloner un objet" nécessitent en commun la création dynamique d'une copie de la classe (pour l'héritage ou l'instanciation) ou d'une copie de l'objet (pour le clonage).

La figure 7 illustre aussi un arbre 27b d'une classe "ClasseD1" obtenue par duplication de "Classe1". Cette figure illustre, d'une manière générale, que la duplication de l'instance de "GenericClass" ne suffit pas, car la classe dupliquée "ClasseD1" va pointer aux mêmes instances "GenericMethod" et "GenericAttribute" de l'instance "Classe1" de "GenericClass". Par exemple, il ressort de la figure 7 que "Attribut1" est commun aux deux classes, alors que les deux classes devraient être distinctes et indépendantes. Par conséquent, pour dériver une classe ou un objet, c'est-à-dire pour créer par héritage une nouvelle classe, pour instancier une classe ou pour cloner un objet, il faut non seulement dupliquer l'instance de "GenericClass", mais aussi dupliquer chaque instance référencée directement ou indirectement par l'instance de "GenericClass".

D'autre part, les développeurs de logiciels utilisent une technique de sérialisation qui s'applique à de nombreux langages, tels que Java ou C++. La sérialisation permet de stocker tout objet sur un support d'enregistrement de données, un disque par exemple. Si par exemple un premier objet référence des objets, qui eux-mêmes référencent d'autres objets et ainsi de suite, il suffit d'écrire le premier objet sur le disque avec la méthode de sérialisation pour stocker automatiquement en mémoire l'arborescence de tous les objets référencés directement ou indirectement par le premier objet.

La figure 8 illustre schématiquement le principe du procédé de dérivation d'une classe "Classe1" ou d'un objet. L'outil 30 met en oeuvre ce procédé. L'exemple illustré porte sur la création d'une classe "ClasseD2" par héritage de la classe "Classe1" telle qu'illustrée dans la figure 7, étant bien entendu que le procédé peut s'appliquer de la même façon à l'instanciation d'une classe ou le clonage d'un objet. Comme indiqué à la figure 8, le procédé de dérivation consiste en une première étape à sérialiser la classe "Classe1" en la copiant sur un disque D, par exemple le disque dur d'une machine 2a ou 2b de l'ensemble informatique 1 de la figure 1. Ainsi, toute l'arborescence 27a de cette classe, telle qu'illustrée dans la figure 7, va être dupliquée et stockée dans le disque. La seconde étape consiste à lire la classe dupliquée, stockée dans le disque D, en la chargeant dans l'outil 30, c'est-à-dire dans la mémoire vive sur laquelle est chargé le programme de l'outil. Il en résulte la classe dupliquée "ClasseD2" ayant une arborescence 27c identique à celle de l'arborescence 27a de la classe mère "Classe1" mais indépendante de la classe mère. En langage Java par exemple, les deux étapes du procédé peuvent s'exécuter par exemple par les deux instructions suivantes :
***FileStream*****.writeObject(Classe1)** ;
// pour sérialiser l'arborescence d'origine Classe1
Nouvel objet ou Nouvelle classe = ***FileStream*****.readObject()** ;
// pour avoir une copie de Classe1

La figure 9 illustre une boîte de dialogue 31 pour l'utilisation de l'outil 30. Cet exemple se rapporte à celui de la figure 9, qui porte sur la création d'une classe héritant d'une autre classe. En exécutant la commande "Nouvelle classe héritée" du menu "Classes" de la figure 3, la fenêtre de dialogue 31 de la figure 9 apparaît. Cette fenêtre contient une zone de texte "Nom de la nouvelle classe" et une liste des classes parmi lesquelles la classe mère peut être choisie. Dans l'exemple choisi, la classe "Classe1" de la liste est choisie, comme indiqué en grisé à la figure 9. Dans l'exemple précédent, la classe héritée se nomme "classeD2".

La figure 10 illustre un exemple de boîte de dialogue 32 résultant de la validation de la boîte 31. La boîte 32 est semblable à la boîte 23 de la figure 3. Par conséquent, seules les différences vont être indiquées ci-après. Les données contenues dans la boîte 32 sont remplies automatiquement par le logiciel de l'outil 30. Le nom de la classe est celui qui a été indiqué par le concepteur C dans la boîte 31 de la figure 9. La boîte 32 contient en plus un tableau indiquant le ou les parents de la classe, ici "Classe1" que le concepteur C a sélectionnée dans la liste de la boîte 31. Les autres données sont semblables à celles de la boîte 23, puisque l'arborescence 27c de la classe fille "ClasseD2" est la même que l'arborescence 27a de la classe mère "Classe1". Grâce aux boutons de commande de la boîte 32, il est possible de faire évoluer simplement la nouvelle classe "ClasseD2" indépendamment de la classe mère "Classe1".

La classe générique globale "GenericClass" a donc un attribut supplémentaire nommé "parent", qui est un tableau contenant des instances de la classe générique globale, telles que Classe1. Le tableau permet de reconnaître la provenance de l'instance en cours de la façon suivante :
(a) Si l'instance en cours est un objet, alors :
   - si d'une manière générale "parent[0]" (indiqué par exemple dans le tableau auquel se réfère l'instance en cours) est un objet, l'objet en cours a été cloné à partir de parent[0],
   - si "parent[0]" est une classe, l'objet en cours est une instance de parent[0],
(b) Si l'instance en cours est une classe, alors "parent[0]" est
   - soit vide, ce qui veut dire que la classe a été créée sans héritage avec la commande "Nouvelle classe",
   - soit une classe (et non un objet), ce qui veut dire que la classe en cours a hérité de "parent[0]" grâce à la commande "Nouvelle classe héritée"
(c) Il en résulte, par itération, que le tableau "parent" indique tous les ascendants de l'instance en cours.

Le procédé ressort clairement des figures 8, 9 et 10. En réponse à la première instruction indiquée dans la figure 8, "Classe1" est sérialisée en la copiant sur le disque D. En réponse à la seconde instruction, la classe ainsi sérialisée est sauvegardée de nouveau en mémoire, mais avec modifications d'attributs, notamment le nom de classe "ClasseD2" et le tableau "Parent". Les deux arborescences 27a et 27c sont donc les mêmes, mais elles sont séparées l'une de l'autre. Par exemple, bien qu'elles aient les deux mêmes instances "Attribut1", en réalité ces deux instances sont complètement distinctes l'une de l'autre en mémoire et peuvent vivre indépendamment l'une de l'autre. Notamment, elles peuvent à tout moment être modifiées différemment l'une de l'autre. Cet exemple fait aussi ressortir qu'il en est de même pour les deux autres commandes "Nouvel objet de classe" et "Cloner un objet".

Plus généralement, il ressort de la description qui précède que le procédé de dérivation d'une classe d'objets et/ou d'un objet ayant un nom donné consiste à faire une copie de tout l'arbre de la classe ou de l'objet, à mémoriser la copie de l'arbre et à changer ledit nom pour attribuer un nom à la copie mémorisée. On a vu que de préférence la copie est faite par une sérialisation de l'arbre représentatif de ladite classe ou dudit objet en copiant l'arbre dans une mémoire D et la mémorisation de la copie de l'arbre consiste à la copier à nouveau en mémoire 30. En outre, on a vu aussi que la sérialisation, qui peut se faire dans divers langages, est particulièrement simple à mettre en oeuvre en langage Java®.

La fonction du générateur 14 d'interface va maintenant être décrite. Jusqu'à présent, on a vu comment le concepteur C peut facilement créer des classes d'objets et des objets répondant aux besoins de l'utilisateur U. Les classes et objets ainsi créés sont stockés dans la base d'interface 15. Cependant, ces classes et objets demeurent incompréhensibles et inexploitables pour l'utilisateur U. De préférence, il est d'ailleurs interdit à l'utilisateur U d'y avoir accès, afin d'assurer au concepteur leur intégrité. Le générateur 14 a pour fonction de transformer les classes et objets ainsi créés en des interfaces sous forme de documents dans lesquels les commandes répondant aux besoins exprimés par l'utilisateur U sont compréhensibles par lui. Afin de distinguer ces interfaces des autres interfaces impliquées dans cette description, elles seront appelées interfaces documentaires. Le langage employé dans ces interfaces documentaires peut être le langage courant et/ou un langage spécialisé de la compétence de l'utilisateur.

Le fonctionnement du générateur 14 va ressortir de l'exemple qui suit, qui reprend et explicite l'exemple précédent selon lequel l'entreprise est une agence bancaire, l'utilisateur U est le directeur de l'agence et le concepteur C est un informaticien de la banque. On suppose que le directeur U veut : (1) consulter le système d'information de la banque pour faire des requêtes dans les bases de données en vue d'obtenir une liste de ses clients d'un type donné, des étudiants dans l'exemple considéré, et (2) imprimer des lettres personnalisées de plusieurs types, telles que des lettes d'information, des lettres d'invitation et des lettres de rappel. L'informaticien C traduit l'exploitation désirée par le directeur en deux questions. En l'occurrence, l'informaticien crée en réponse deux classes d'objets : "consultation_système" et "impression" au moyen des deux outils 20 et 30. Il peut créer chacune de ces deux classes directement en activant la commande "Nouvelle classe" de la fenêtre 22 de la figure 2, soit indirectement par dérivation d'une classe semblable. Dans ce dernier cas, le concepteur C pourra actionner la commande "Rechercher" de la fenêtre 22 pour trouver une classe semblable. Si une classe semblable existe, il la sélectionne dans la liste des classes et peut la dériver, par exemple en activant la commande "Nouvelle classe héritée" de la figure 2 et en modifiant, ajoutant ou supprimant des attributs et/ou des méthodes.

Le générateur 14 met en oeuvre un procédé de génération d'une interface documentaire pour la commande d'un système informatique par un utilisateur, la commande étant faite à partir d'au moins un objet incluant des descriptions. Le procédé consiste à extraire de l'objet au moins en partie lesdites descriptions et à les organiser pour traduire le sens de ladite commande en un langage compréhensible à l'utilisateur et ainsi faire de ladite interface une interface documentaire. Le générateur 14 comprend donc un bloc d'extraction 14a et un bloc de génération 14b. Le bloc d'extraction 14a prélève de la base d'interface 15 l'objet sélectionné par le concepteur et y extrait les descriptions. Le bloc de génération 14b organise les descriptions pour former l'interface documentaire et la stocker dans la base d'interface 15.

Le procédé va être mieux compris à partir de l'exemple précédent. Parmi les attributs de la classe "consultation_système" de l'exemple considéré se trouvent des méthodes qui font appel à des commandes spécifiques pour l'exploitation des données du système, en l'occurrence aux bases de données du système 10. Parmi ces méthodes, le concepteur C crée une méthode "lister_étudiants" de façon à avoir comme description "Liste de tous étudiants ayant". L'ingénieur attribue à la méthode "lister_étudiants" un code de retour de type "liste" ayant comme description "la liste des noms et adresses". Il attribue aussi à cette méthode, au moyen des boîtes de dialogue 25 et 26 illustrées dans les figures 5 et 6, les trois paramètres tels que définis dans le tableau A ci-dessous.

**TABLEAU A**

| **nom** | **description** | **type** | **valeur par défaut** |
|---|---|---|---|
| "âge <" | "un âge inférieur à" | entier | 26 ans |
| "lieu d'étude" | ", étudiant à" | Paris, Versailles | Paris |
| "emprunt >" | "et ayant fait un emprunt supérieur à" | entier | 6000 francs |

En ce qui concerne la classe "impression", l'ingénieur C crée une méthode "imprime_invitation" de façon à avoir une description telle que "Impression de lettres à :", et attribue à cette méthode un code de retour du type "void" signifiant que la méthode ne retourne pas de valeur, et deux paramètres tels que définis dans le tableau B ci-dessous.

**TABLEAU B**

| **nom** | **description** | **type** | **valeur par défaut** |
|---|---|---|---|
| "destinataire" | "Impression de lettres à" | liste | lister_étudiants de consultation_système |
| "type de lettre" | "type de lettre :" | invitation d'anniversaire rappel information sur l'emprunt Étude | information |

Ces tableaux indiquent comment remplir les boites de dialogue 25 et 26 des figures 5 et 6 pour constituer les deux classes "consultation_système" et "impression" à l'aide de la boite de dialogue 23 de la figure 3. Plus généralement, l'interface documentaire d'un objet est créée à partir des descriptions correspondant à cet objet, ses attributs, ses méthodes et les paramètres des méthodes.

Pour former une interface documentaire, le concepteur active dans la fenêtre 22 de la figure 2 le menu "Exporter à U". Cette commande appelle le générateur 14 pour générer une interface documentaire de l'objet sélectionné. Le générateur 14 extrait les descriptions de l'objet et les organise pour former l'interface documentaire.

La figure 11 illustre l'interface documentaire 18a de la méthode "lister_étudiants". On y voit que l'interface documentaire 18a a été obtenue par extraction des descriptions de la méthode et de ses paramètres, telles que définies dans le tableau A. En particulier, les valeurs "26 ans", "Paris" et "6000 francs" sont les valeurs par défaut indiquées au tableau A. De manière générale, une interface documentaire 18 comprend du texte et au moins un champ possible 19 dont le contenu initial est fait de valeurs par défaut et peut être modifié par l'utilisateur U.

La figure 12 illustre un exemple d'interface documentaire 18b de la méthode "imprime_invitation" de la classe "imprimer" définie précédemment. Les exemples des figures 11 et 12 suffisent à l'homme du métier pour savoir comment construire une interface documentaire relative à tout un objet. D'une manière générale, lorsque l'objet contient toutes les descriptions, elles sont de préférence organisées par le générateur 14 dans l'ordre suivant :
1. la description de l'objet (non illustrée), par exemple "impression" ;
2. la description de chaque attribut (non illustrée) , par exemple le numéro de l'imprimante, la qualité d'impression, la couleur de l'encre, le papier d'impression ; cette description est suivie d'un champ qui correspond à sa valeur ; si l'attribut a un nombre limité de valeurs, ce champ est une liste contenant toutes les valeurs possibles et ne faisant apparaître que la valeur sélectionnée ;
3. la description de chaque méthode (voir tableaux A et B, figures 11 et 12 et le texte s'y rapportant), cette description étant attachée et de préférence suivie de :
   3.1. la description de sa valeur de retour, attachée ou suivie d'un champ qui représente cette valeur, et
   3.2. la description de chacun de ses paramètres, attachée ou suivie d'un champ (19) représentatif de la valeur du paramètre ;
4. un moyen de commande (voir figure 12) indiquant quand la méthode doit être exécutée, l'exécution pouvant être immédiate ou différée, soit à un moment déterminé par une date et une heure, soit intervenir à la suite d'une autre méthode définie.
   4.1. Dans le premier cas, un bouton de commande est libellé "Exécution immédiate" ;
   4.2. Dans le second cas, un bouton de commande inclut une étiquette de valeur "à" (par exemple, --imprimer "à"--) suivie d'un champ "heure" et d'un champ "date" lié à un calendrier des jours ouvrables de l'année;
   4.3. Dans le troisième cas, un bouton de commande inclut une étiquette intitulée "après la fin d'exécution de" suivie d'un champ permettant de choisir une méthode d'un objet quelconque et signifie que la méthode sera exécutée après la fin d'exécution de la méthode sélectionnée.

Le concepteur C a la possibilité de changer la présentation de la page, ajouter ou enlever des champs, sélectionner les descriptions à prendre en compte, et modifier le texte de descriptions et des types pour rendre la compréhension du document plus facile. Il s'ensuit qu'un même objet peut générer plusieurs interfaces documentaires adaptées à des besoins particuliers offerts dans l'objet. Par exemple, on a vu précédemment que l'objet "impression" peut avoir un grand nombre d'attributs et de méthodes, qui offre un grand choix d'interfaces documentaires en fonction des attributs et méthodes adaptées aux besoins. Il est bien sûr conseillé au concepteur C de faire les interfaces documentaires 18 avec l'aide de l'utilisateur U.

La description va maintenant porter sur le module de commande 12 servant à l'utilisateur U pour obtenir les interfaces documentaires 18 de la base 15. Le module 12 contient un bloc 40 de génération de documents 41 issus des interfaces documentaires stockés dans la base 15. Le bloc 40 et donc connecté à la base 15 pour y prélever les interfaces documentaires 18 et déterminer les documents de commande 41 adaptés aux besoins particuliers de l'utilisateur U. Par exemple, en supposant que l'utilisateur a besoin du document "impression", une interface incluant la méthode illustrée dans la figure 12 va se présenter à l'utilisateur, qui pourra modifier les valeurs des champs 19 et sélectionner les boutons de commande d'exécution pour en faire un document 41. Le document 41 illustré dans la figure 12 correspond à l'interface documentaire 18 dans laquelle les valeurs des champs 19 ont maintenues inchangées par l'utilisateur et le bouton d'exécution différée à une heure prédéterminée a été activé (en grisé dans la figure 12).

La figure 13 illustre un exemple de boîte de dialogue 42 présentée à l'utilisateur U par le module d'utilisateur 12. La barre de menus de la boîte 42 contient notamment deux menus principaux "Documents" et "Politiques". Dans le menu "Documents" se trouvent la commande "Rechercher" pour trouver des interfaces documentaires, par exemple à partir des descriptions des objets correspondants, et la commande "Ouvrir" pour lister les interfaces documentaires par le nom de leurs objets correspondants et y sélectionner un nom d'objet. Un objet sélectionné s'affiche avec la description de l'objet. De cette interface, l'utilisateur en fait le document désiré. Dans le menu "Documents" se trouvent aussi bien sûr les commandes de sauvegarde (Enregistrer et Enregistrer sous...) et de fermeture du document.

Le menu "Politiques" contient notamment deux commandes "Afficher" et "Afficher l'historique". La commande "Afficher" (display) affiche l'ensemble des documents créés par l'utilisateur dans l'ordre d'exécution des commandes qu'il a choisi. Cet ensemble définit la politique de l'utilisateur. Il dispose ainsi d'une vue globale des méthodes qu'il a activées à partir de plusieurs documents. Il peut la valider ou la modifier. Par exemple, le fait de cliquer deux fois sur une méthode choisie entraîne l'ouverture du document correspondant pour d'éventuelles modifications. La commande "Afficher l'historique" présente toutes les méthodes qui ont été exécutées par l'utilisateur, l'état de fin d'exécution, et l'heure. Le menu contient aussi les commandes de sauvegarde et de fermeture.

De manière générale, la description qui précède fait ressortir un procédé de génération d'une interface 18 pour la commande d'un système informatique 10 par un utilisateur U, la commande étant faite à partir d'au moins un objet incluant des descriptions de l'objet et/ou d'au moins un membre de l'objet, le procédé consistant à extraire de l'objet au moins en partie lesdites descriptions et à les organiser pour traduire le sens de ladite commande en un langage compréhensible à l'utilisateur et ainsi faire de ladite interface une interface documentaire.

L'outil permet au concepteur C de facilement adapter le texte des descriptions extraites, de façon que leur organisation rende compréhensible le texte de l'interface. Pour rendre plus souple le procédé, le concepteur pourrait sélectionner les descriptions à extraire.

De préférence, les descriptions incluant au moins une description d'une méthode de l'objet, le procédé consiste à attacher à cette description une description de son code de retour et/ou une description d'au moins un paramètre respectif de la méthode et une valeur 19 du paramètre dont la valeur peut être modifiable. Dans ce cas également et comme dans l'exemple illustré, le procédé peut consister avantageusement à ajouter à l'interface 18 un moyen de commande, par l'utilisateur, du moment d'exécution de ladite interface.

Dans l'exemple décrit, le texte des descriptions servant à faire l'interface est fait par un concepteur utilisant le système, en réponse à des besoins qui lui sont soumis par l'utilisateur. Cette coopération entre le concepteur et l'utilisateur rend le procédé très souple, très évolutif et très performant. Cependant, il est évident que cette condition n'est pas nécessaire, l'outil étant par exemple adapté à un métier donné ou une fonction d'entreprise donnée.

Enfin, on a vu précédemment l'avantage que pouvait tirer l'utilisateur de la possibilité offerte dans l'exemple décrit de sélectionner des interfaces et de définir leur ordre d'exécution temporel, et de lui présenter dans une fenêtre les interfaces sélectionnées et disposées dans ledit ordre.

Le module de conception 13 dispose en outre d'un outil de commande 50 de fonctions analogues dans différents systèmes d'exploitation et/ou applications et d'un outil de génération automatique de code 60 pour mettre en oeuvre l'outil d'interface 50. Le système informatique 10 représenté sur la figure 1 sera considéré comme un système très hétérogène, représentatif d'un cas difficile à gérer. Dans l'exemple considéré, les deux systèmes d'exploitation 4a et 4b étaient deux versions différentes du système d'exploitation UNIX, connues sous les noms UNIX Berkeley et UNIX AT&T. Les deux machines 2 sont aussi supposées inclure dans leurs mémoires respectives 3 deux logiciels d'impression différents l'un de l'autre 6a et 6b, tels que les logiciels connus sous leurs noms de marques déposées DPF OpenSpool et XPRINT.

On suppose que les deux systèmes d'exploitation 4a, 4b et les deux logiciels d'impression 6a, 6b ont au moins une fonctionnalité commune F. Cependant, les logiciels 4a, 4b, 6a, 6b pouvant être très différents l'un de l'autre, cette fonctionnalité F peut être exécutable selon diverses commandes différentes d'un logiciel à un autre.

Plusieurs fonctionnalités peuvent être communes à tout ou partie des logiciels installés, tels que l'impression de documents et la sauvegarde de documents. La description portera sur l'impression de documents comme exemple de fonctionnalité F. Cette fonctionnalité peut comprendre plusieurs fonctions f, par exemple les fonctions : f1 "imprimer" ; f2 "lister les impressions en cours" ; f3 "visualiser les files d'attente" ; f4 "purger les impressions" ; et f5 "changer la priorité d'une impression dans une file". Une fonctionnalité F est donc dans ce cas une famille de fonctions f. L'exemple qui suit portera sur la fonction f1 et suffira à l'homme du métier pour comprendre l'invention dans sa généralité.

On suppose que la fonction f1 "imprimer" dans les quatre logiciels 4a, 4b, 6a et 6b dans le système informatique 10 de la figure 1 est faite par quatre commandes spécifiques différentes respectives : Pa et Pb pour les systèmes d'exploitation respectifs 4a et 4b ; et Pc et Pd pour les logiciels d'impression 6a et 6b. Dans l'exemple des logiciels considérés, les deux versions différentes 4a et 4b du système d'exploitation UNIX ont des commandes d'impression respectives Pa = "lpr" et Pb = "lp". Néanmoins, on pourrait aussi avoir des commandes d'impression telles que : "enq" pour le système d'exploitation connu sous le nom de marque déposée AIX ; "print" pour le système d'exploitation DOS pour ordinateur personnel ; "np" pour le logiciel d'impression DPF OpenSpool ; et "xpad" pour le logiciel d'impression connu sous le nom de marque déposée XPRINT.

Chaque commande spécifique Pa-Pd comprend des options éventuellement associées à des types particuliers respectifs. Le tableau C suivant illustre un exemple d'un inventaire concernant seulement les commandes d'impression "lpr" et "lp" des systèmes d'exploitation 4a et 4b. Cet exemple suffit à l'homme du métier pour comprendre l'invention.

**TABLEAU C**

| **Options de "lpr"** | **suivies de** | **Options de "lp"** | **suivies de** | **options - commentaires** |
|---|---|---|---|---|
| -P | chaîne | -d | chaîne | destination de l'impression |
| -T | chaîne | -t | chaîne | titre du document |
| -# | num | -n | num | nombre de copies |
| n'existe pas | | -w | | écriture d'un message sur terminal de C à la fin de l'impression |
| -r | | n'existe pas | | destruction du fichier lorsque l'impression est lancée |

L'outil de commande 50 est un outil logiciel ayant pour but principal d'offrir à un utilisateur informaticien, le concepteur C dans la figure 1, une commande commune P0 pour l'exécution de chacune des commandes d'impression différentes Pa-Pd dans l'exemple illustré. Comme indiqué à la figure 1, l'outil illustré 50 comprend un bloc 51 de définition de la commande commune P0, et deux pilotes d'impression (drivers) 52a, 52b pour les deux machines respectives 2a et 2b, les pilotes réagissant à la commande commune P0 pour générer la commande Pa ou Pc dans la machine 2a et Pb ou Pd dans la machine 2b. Dans l'exemple illustré, les deux pilotes 52a et 52b sont implantés dans les deux mémoires 3 des deux machines 2 tandis que le bloc 51 est incorporé au module de conception 13. Le bloc de définition 51 est connecté aux deux pilotes.

L'outil de commande 50 met en oeuvre un procédé de commande d'une fonction f exécutable sous des commandes différentes Pa-Pd dans des logiciels respectifs 4a, 4b, 6a, 6b, les commandes pouvant avoir chacune au moins une option. Le procédé consiste à définir dans une classe abstraite une méthode abstraite pour la fonction f, la méthode abstraite incluant des paramètres correspondant à l'union, au sens logique, de toutes les options (tableau C) des commandes spécifiques, à définir une commande commune (P0) incluant des symboles arbitraires correspondant aux paramètres de la méthode abstraite, à former au moins un pilote (52) pour implémenter la méthode abstraite dans une machine, et à faire exécuter par le pilote l'une des commandes spécifiques avec des options équivalant aux options de la commande commune.

Supposons que l'utilisateur U désire exécuter la commande : imprimer en deux exemplaires, avec une imprimante appelée imprimante 1 du système informatique 10, le fichier appelé *monfichier,* en indiquant en en-tête le nom du fichier, et détruire le fichier une fois imprimé. Cette commande dans les logiciels 4l et 4b s'écrit de la façon suivante, compte tenu du tableau C:

| | |
|---|---|
| **lpr** | **-P**imprimantel -#2 -r monfichier |
| **lp** | **-d**imprimantel -n2 monfichier |

où il est à noter du tableau C que la suppression du fichier n'est pas prévue pour la commande "lp".

Selon le procédé précité, on forme une méthode abstraite pour la fonction f. Une méthode générale comprenant un en-tête et un corps, une méthode abstraite n'a qu'un en-tête, de sorte qu'elle n'est pas exécutable et que la classe correspondante ne peut donc pas être instanciée. Dans l'exemple de la fonction f1 "imprimer", on crée donc une méthode abstraite que l'on appellera du même nom "imprimer". Cette méthode inclut des paramètres correspondant respectivement aux options des commandes spécifiques Pa-Pd, le nombre de paramètres correspondant au nombre formé par l'union, au sens logique (assembliste), de toutes les options des commandes. Ainsi, dans l'exemple de la fonction "imprimer", et en illustrant les exemples dans le langage Java®, il résulte du tableau C que la méthode abstraite "imprimer" est définie par les six paramètres suivants :

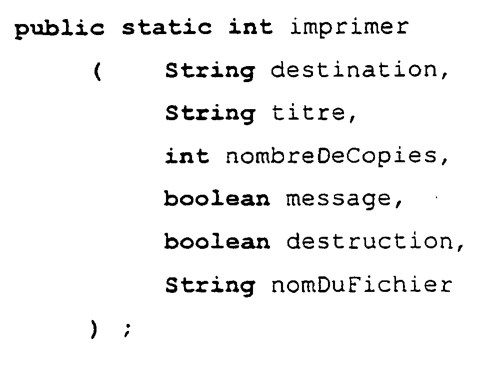

Des six paramètres ci-dessus, les cinq premiers correspondent aux cinq options définies dans le tableau C et le dernier paramètre désigne le nom du fichier qui se place à la fin des commandes d'impression "lpr" et "lp".

Une classe abstraite, au sens orienté objet, contient au moins une méthode abstraite, ici la méthode abstraite "imprimer" définie pour l'ensemble des commandes analogues Pa-Pd de la fonction donnée f1. La classe abstraite pourrait être quelconque. De préférence, comme dans l'exemple considéré, la classe abstraite correspond à la fonctionnalité F et a, dans l'exemple illustré, le même nom "impression". La classe abstraite "impression" n'a donc comme méthodes que toutes les méthodes abstraites se rapportant aux fonctions f1-f5 de la fonctionnalité F. La classe "impression" correspond à une interface, telle qu'elle est définie par exemple dans le langage Java®. Une telle interface est définie comme la classe la plus abstraite qu'on puisse construire, c'est-à-dire une classe dont chaque méthode est abstraite.

On a vu que le procédé mis en oeuvre par l'outil 50 consiste d'autre part à définir une commande commune P0 incluant des symboles arbitraires correspondant aux paramètres de la méthode abstraite. Par exemple, la commande commune P0 a la syntaxe suivante : 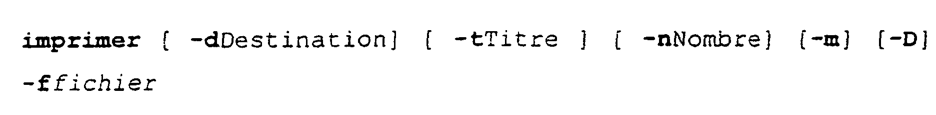 ayant comme symboles arbitraires -d, -t, -n, -m, -D et -f. Ces symboles peuvent ou non être associés à des options, celles-ci étant mises entre crochets, de sorte que seul le terme "fichier" n'est pas une option, comme cela a été indiqué précédemment. L'absence d'option signifiant que le symbole correspond à un type booléen.

Le procédé tel que défini précédemment consiste aussi à construire les pilotes 52a et 52b pour générer les commandes Pa et Pb ("lpr" et "lp") dans les deux machines 2a et 2b respectives. Un pilote implémente, dans le sens de la technologie orientée objet, l'interface "impression", c'est-à-dire qu'un pilote définit un corps à chaque méthode de l'interface, de façon que la classe abstraite puisse générer une classe exécutable. Le corps ainsi défini permet de construire les options de la commande correspondante ("lpr" par exemple) avec les paramètres de la méthode et de lancer cette commande.

L'exemple qui suit illustre comment créer le pilote 52a relatif à la commande "lpr" et indique clairement à l'homme du métier comment d'autres pilotes peuvent être créés. Le pilote 52a est une classe qui permet d'implémenter l'interface impression de la façon suivante.

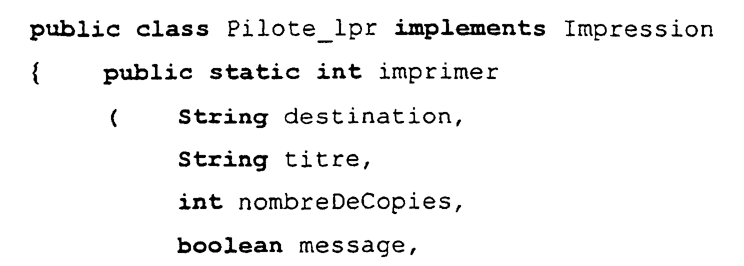

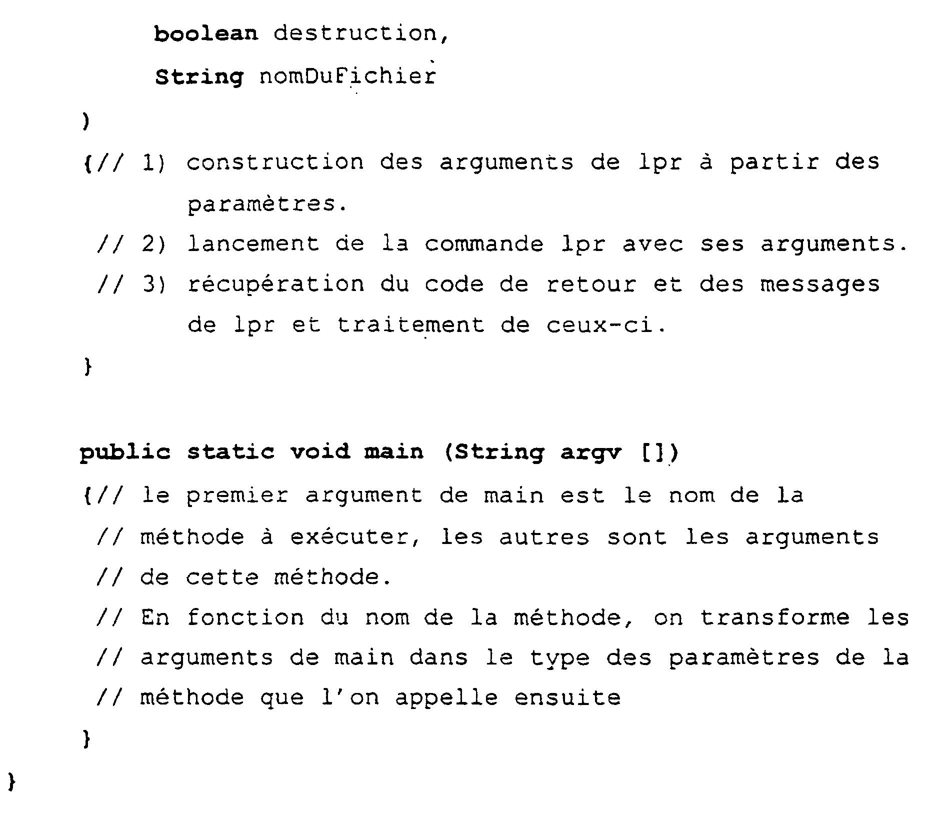

Plus généralement, d'autres possibilités de pilotes existent, par exemple un ou les deux pilotes pourraient être installés aussi dans l'interface de commande 11, ou un seul pilote suffirait, avantageusement installé dans l'interface de commande 11. De même, il peut être prévu seulement un seul pilote pour un système n'ayant qu'une seule machine, le pilote servant à générer les diverses commandes des logiciels installés dans cette machine.

Enfin, le procédé défini précédemment consiste à faire exécuter par le pilote l'une des commandes spécifiques, par exemple "lpr", avec des options équivalant aux options de la commande commune.

L'équivalence entre les options de la commande "lpr" et les options de la commande commune P0 peut se faire de diverses façons. La façon préférée qui va être illustrée consiste à créer un fichier de configuration définissant les types et les valeurs par défaut des options de chaque commande spécifique pouvant être exécutée par le pilote. Dans le présent exemple, la commande spécifique est "lpr", qui sera exécutée par le pilote 52a. De préférence, le fichier de configuration comprend en outre le type de chaque option et/ou des commentaires éventuels et/ou le nom du pilote.

Le fichier de configuration est de préférence créé préalablement à la construction et avantageusement lors de l'installation du pilote. Dans l'exemple choisi, le fichier de configuration fourni par le pilote est appelé "ConfigImpression". Tout autre nom peut lui être donné, mais il importe que ce nom soit le même pour tous les pilotes de la même fonction f des commandes concernées Pa-Pd et qu'il soit accessible par tous ces pilotes, de préférence en étant installé dans un même répertoire..

Le fichier de configuration de notre exemple est :

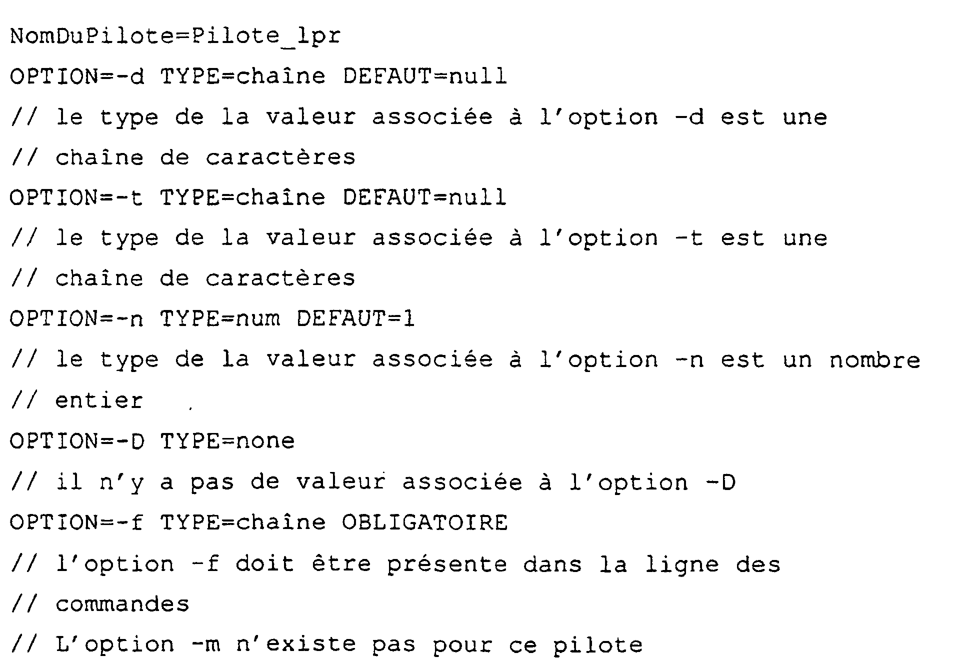

On retrouve dans le fichier de configuration les symboles utilisés dans la commande commune P0.

L'équivalence entre options de la commande commune et de la commande spécifique consiste en outre à déterminer les paramètres de la commande spécifique par consultation du fichier de configuration par la commande commune. Ainsi, la commande commune P0 lit le fichier de configuration afin de vérifier que les options de la syntaxe de la commande commune sont bien compatibles avec celles du pilote installé. En d'autres termes, la commande commune P0 détermine si les options fournies par le concepteur C sont légales. Si oui, elle est complétée par l'ensemble des options non fournies et elle appelle le pilote pour exécution de la commande spécifique. Sinon, un message d'erreur est émis avec la description des options légales. D'autres part, elle vérifie si toutes valeurs attachées aux options sont bien affectées. Si la valeur due à une option n'existe pas, elle est déterminée à partir de sa description (valeur par défaut) dans le fichier de configuration.

Sachant que la commande d'impression "lpr" telle que définie précédemment est :
**1pr -P**imprimantel -#2 -r monfichier
alors la commande commune P0 correspondante est :
**imprimer -n**2 **-d**imprimantel **-D -f**monfichier

La commande commune P0 appelle alors le pilote 52a relatif à la commande "Ipr" de la façon qui suit :

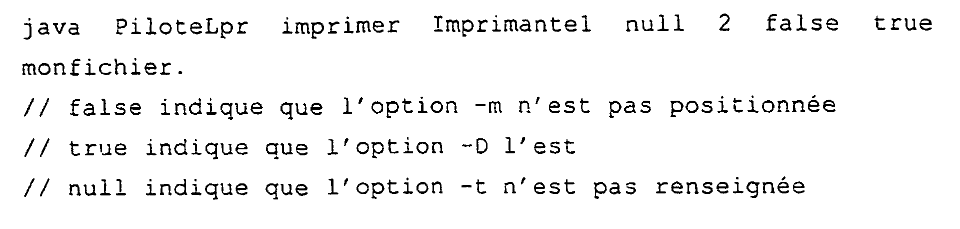

Cette commande provoque l'appel de la méthode principale "main" du pilote 52a qui, à son tour, déclenche l'appel de la méthode "imprimer" de la façon suivante:
imprimer («Imprimante1», null, 2, false, true, «monfichier») ;

La méthode "imprimer" lance ainsi la commande "lpr" sous la forme :
lpr -Pimprimantel -#2 -r monfichier

Jusqu'à présent, on a décrit la fonction d'un pilote d'application. On a vu qu'un pilote est une classe servant à l'implémentation d'une méthode abstraite d'une classe abstraite. Le pilote est défini par des données écrites par le concepteur C à l'aide de l'outil 20 ou 30 du module de conception 13. Les lignes de code de ce logiciel doivent normalement être entièrement écrites par le concepteur C. Une grande partie de ce travail est très fastidieux et donc coûteux en temps et en argent. Cependant, la génération automatique pose deux problèmes. Le premier problème est de traduire le pilote en un langage orienté objet. Le second problème est de générer automatiquement un corps à la méthode abstraite. On a vu que le corps de la méthode abstraite doit inclure les données spécifiques de la commande spécifique à exécuter, et un pilote peut servir à l'exécution de plusieurs commandes spécifiques. Ceci ne peut plus être fait au moyen des outils 20 et 30 et requiert des opérations manuelles du concepteur C. Les difficultés soulevées par ces deux problèmes amènent le concepteur à écrire les pilotes.

Le système informatique 10 de l'invention inclut un outil 60 de génération automatique, en un langage orienté objet, d'un pilote 52 d'implémentation d'une méthode abstraite d'une classe abstraite pour l'exécution d'une commande spécifique Pa-Pd ayant des données spécifiques (tableau C), la méthode abstraite ayant une valeur de retour et au moins un paramètre pourvu d'un type. Le langage orienté objet choisi dans l'exemple qui suit est le langage Java®. L'outil 60 de génération automatique d'un pilote qui va maintenant être décrit est contenu dans le module de conception 13, bien qu'il pourrait être inclus ailleurs dans le système informatique.

Le procédé mis en oeuvre par l'outil 60 consiste à définir la classe du pilote par des données de définition et en faisant correspondre ladite valeur de retour et ledit type dudit paramètre à des types correspondants dans ledit langage, à traduire les données de définition du pilote dans ledit langage, à générer le corps de la méthode abstraite en construisant un squelette à compléter par le concepteur C avec les données spécifiques de la commande spécifique.

Pour la définition du pilote, le concepteur C utilise de préférence l'outil 20 ou 30. Par exemple, il peut utiliser un état vierge de la boîte de la figure 3 pour indiquer le nom de la classe, ajouter au moins un attribut à l'aide de la boite de la figure 4, et au moins une méthode et au moins un paramètre avec les boîtes des figures 5 et 6. Cependant, pour faire la génération automatique, l'outil 60 nécessite une correspondance entre les types des paramètres et de la valeur de retour de la méthode et des types dans le langage choisi, ici en langage Java. Sans cette correspondance, le concepteur devrait écrire manuellement le logiciel du pilote. La correspondance choisie à titre d'exemple se traduit par la règle suivante en langage Java® :
« Tout type défini par le concepteur C doit appartenir à l'ensemble (T) suivant : 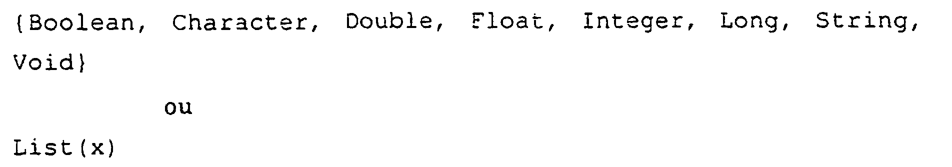 avec x appartenant à (T). »

L'ensemble T peut être étendu à List (List(x)) et successivement pour représenter des tableaux à plusieurs dimensions. De manière générale, l'ensemble T est un tableau pouvant être multidimensionnel. Il est évident qu'on peut remplacer cet ensemble (T) par un autre ensemble avec lequel il est en bijection. Par exemple, en France le type défini en anglais par Character est remplacé par Caractère.

Chaque élément de l'ensemble T correspond à une classe prédéfinie de même nom du langage Java, sauf List et Void, qui correspondent respectivement à la classe Vector et au mot réservé void de Java®. En d'autres termes, les types de l'ensemble T incluent de préférence des classes prédéfinies de même nom du langage.

La figure 14 illustre une boîte de dialogue 61 s'ouvrant pour définir les types de paramètres et la valeur de retour de la méthode. Si par exemple le concepteur veut définir une méthode libellée "copier" qui ne retourne pas de valeur et qui a les deux paramètres suivants :
1) "nom du fichier" (de type String) qui est l'adresse URL (Uniform Resource Locator) du fichier, et
2) "répertoire" (de type String) qui est l'adresse URL du répertoire dans lequel on veut copier le fichier,
il indique le nom "copier" dans le champ texte définissant le nom de la méthode dans la boîte 25 de la figure 5, il sélectionne dans la boîte 61 le type void pour l'introduire dans la champ texte relatif au type de retour de la méthode et actionne le bouton de commande "Ajouter" pour définir un nouveau paramètre avec l'aide de la boîte 26 de la figure 6. Dans la boite 26, il indique le nom du premier paramètre "nom du fichier" et sélectionne dans la boîte 61 le type String, qui vient se placer dans le champ texte relatif au type du paramètre. Le concepteur ajoute de préférence, dans la zone de texte relative à la description du paramètre, le texte par exemple "adresse URL du fichier". Il en est de même pour le second paramètre.
La méthode abstraite "copier" s'écrit donc :
**public void** copier(**String** nom_du_fichier , **String** répertoire) ;

On supposera que le nom de la classe abstraite correspondante, une interface au sens de Java® dans l'exemple illustré, se nomme "opérations sur fichier".

On a vu qu'une autre étape du procédé consiste à traduire les données de définition du pilote dans le langage choisi. La transcription peut se faire selon l'exemple suivant. Le nom de l'interface est le nom de la classe définie par le concepteur C, précédé des deux caractères « I_ ». Si le nom de cette classe contient le caractère blanc « », qui est interdit dans les langages classiques comme Java ou C, on le remplace par « _ ». On applique la même règle pour la classe du pilote, mais en remplaçant « I_ » par « P_ ». Si on génère un nombre n de pilotes, on fait suivre les noms des pilotes par les deux caractères « _i » où i varie de 1 à n. Si les noms comportent des lettres accentuées, on peut aussi prévoir la suppression des accents pour convenir au langage Java ordinaire. Ainsi, la classe s'écrit de la façon suivante : 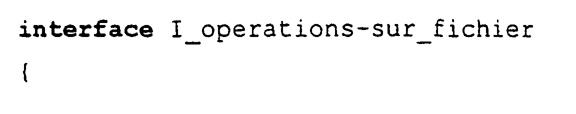 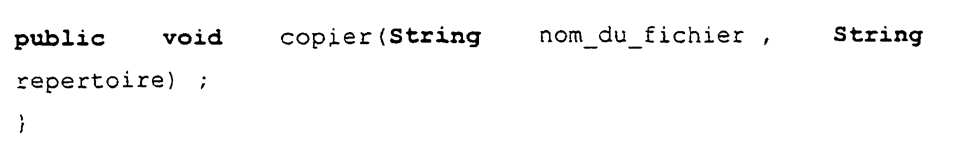 et le pilote correspondant s'écrit de la façon suivante : 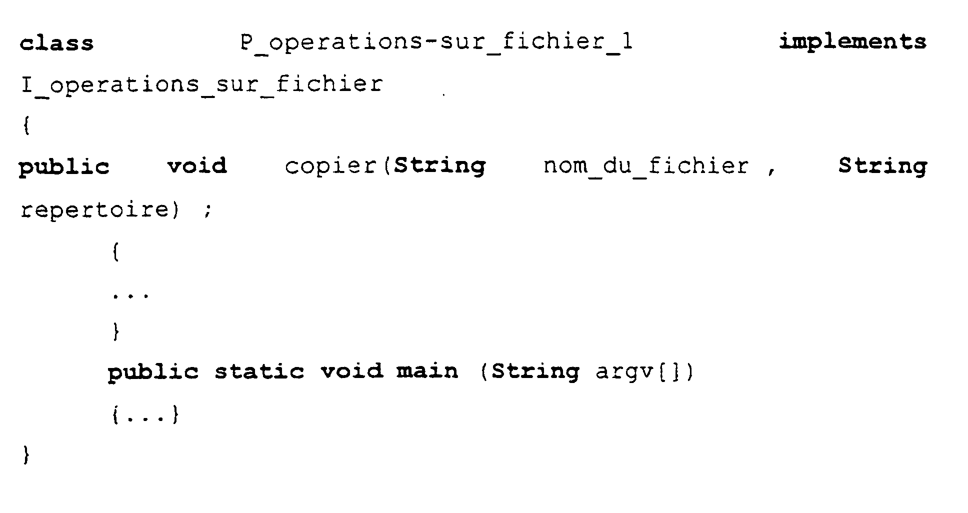 où
- le contenu {...} relatif à la méthode "copier" constitue le corps de la méthode, qui correspond à la commande spécifique à exécuter, et
- main est la méthode principale qui va être appelée par la commande unifiée P0, qui déclenche à son tour l'exécution de la méthode "copier" pour l'exécution de la méthode spécifique "lpr". Il est à noter ici que l'exécution du pilote peut être faite de plusieurs façons connues de l'homme du métier. L'exemple d'exécution choisi consiste à incorporer au pilote la méthode principale main.

Si par exemple la classe "impression" définie précédemment par le concepteur C contient un attribut "nombre de copies" de type Integer et ayant comme valeur par défaut "1", la classe en langage Java® du pilote a pour attribut :
Integer Nombre_de_copies = new Integer (1) ;

On rappelle que c'est l'utilisateur U qui, au moyen d'un document 41, va demander l'exécution de la commande commune P0 par l'intermédiaire de l'interface documentaire 18 correspondante. La commande commune P0 va appeler le pilote par l'intermédiaire de la commande suivante
java P_Impression_1 imprimer 2 monfichier monimprimante

La méthode principale main du pilote va alors être déclenchée. La méthode principale main a, de façon bien connue, tous ses paramètres de type String. La méthode principale main va appeler la méthode "imprimer" qui a des paramètres variés, tels que :
imprimer(Integer p1, String p2, String p3)

Chaque type de paramètre dans la méthode main est donc transformé en le type du paramètre correspondant de la méthode "imprimer". Ceci peut se faire automatiquement dans la méthode
main (String argv []){...}
où le premier argument est le nom de la méthode implémentée de l'interface qu'il faut appeler. Le (i+1)^{e} argument de la méthode main correspond au i^{e} argument de la méthode appelée. Son type doit être cependant changé si l'argument de la méthode n'est pas du type String. Dans le dernier exemple, la méthode main va appeler la méthode "imprimer" du pilote de la manière suivante :
imprimer(new Integer(argv[1]), argv[2], argv[3]) ;
Si argv [1] ne correspond pas à un entier, une exception sera levée et retransmise dans le module de commande 12.

On va maintenant décrire un exemple de génération du corps de la méthode "imprimer". On rappelle que c'est dans le corps de la méthode "imprimer" que se fait l'appel à la commande spécifique Pa ("lpr"). Tout un mécanisme en langage Java permet au pilote d'exécuter la commande spécifique et de recevoir ses résultats. Ce mécanisme est décrit dans l'exemple du paragraphe suivant.

L'interface documentaire 18 de l'utilisateur U appelle commande commune P0, qui elle même appelle le pilote 52a, après consultation de son fichier de configuration, de la façon suivante :
java nomDuPilote nomDeLaMéthode paramètresDeLaMéthode

Une étape du procédé consiste à générer automatiquement le corps de la méthode abstraite en construisant un squelette à compléter par le concepteur C avec les données spécifiques de la commande spécifique "lpr". Le squelette se fait par exemple par construction de chaînes. Dans notre exemple, la construction du squelette à compléter se fait de la manière suivante :

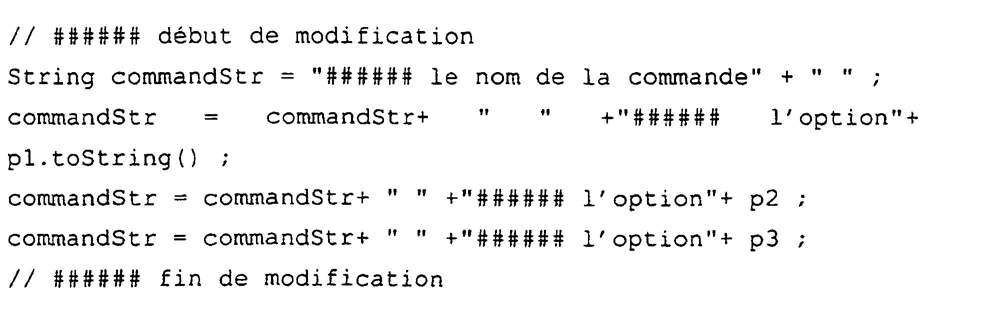

Pour compléter le squelette, il est de préférence indiqué où les données sont à compléter et/ou quelles données sont à compléter par le concepteur C. Dans l'exemple précédent, le concepteur n'a qu'à chercher dans la classe du pilote l'occurrence des caractères successifs ###### . Quand il trouve cette occurrence, le squelette lui indique où et quelles données il doit y introduire pour le compléter. Suivant l'exemple précédent, il va corriger le code de la manière suivante : 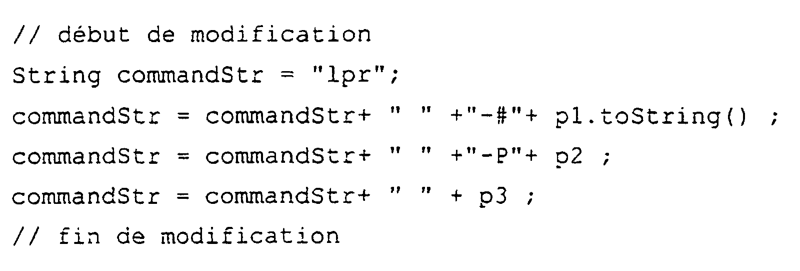 où commandStr va prendre comme valeur possible
"lpr -#2 -Pimprimantel monfichier".
L'appel de cette commande sera ensuite automatique.

On va maintenant décrire un exemple de mise en oeuvre de l'outil 60 pour la formation d'un squelette de pilote généré en langage Java et destiné à une machine fonctionnant sous le système d'exploitation connu sous le nom de marque déposée Windows NT.

L'exemple part d'une classe simple qui contient une seule méthode, la généralisation étant évidente. Le nom de la classe est par exemple "copie de fichier". La méthode de cette classe est "copie", qui retourne la valeur void et qui a les deux paramètres suivants :
- "fichier", de type String, et
- "répertoire de destination", de type String.

Le concepteur ouvre la fenêtre 21 de la figure 2 et actionne par exemple une_commande "génération de pilote" (non illustrée), se trouvant de préférence dans le menu "Exporter à U". Cette commande génère le code suivant :

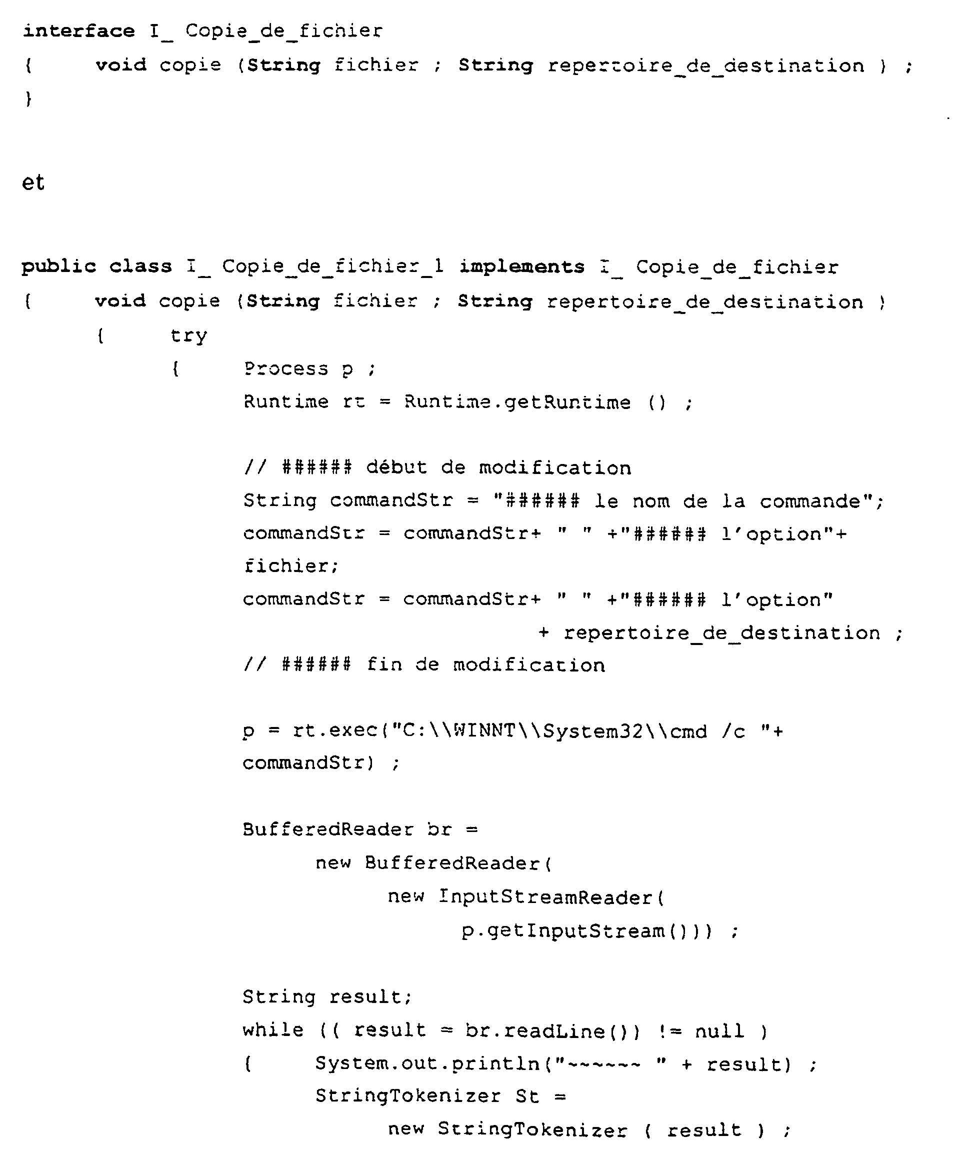

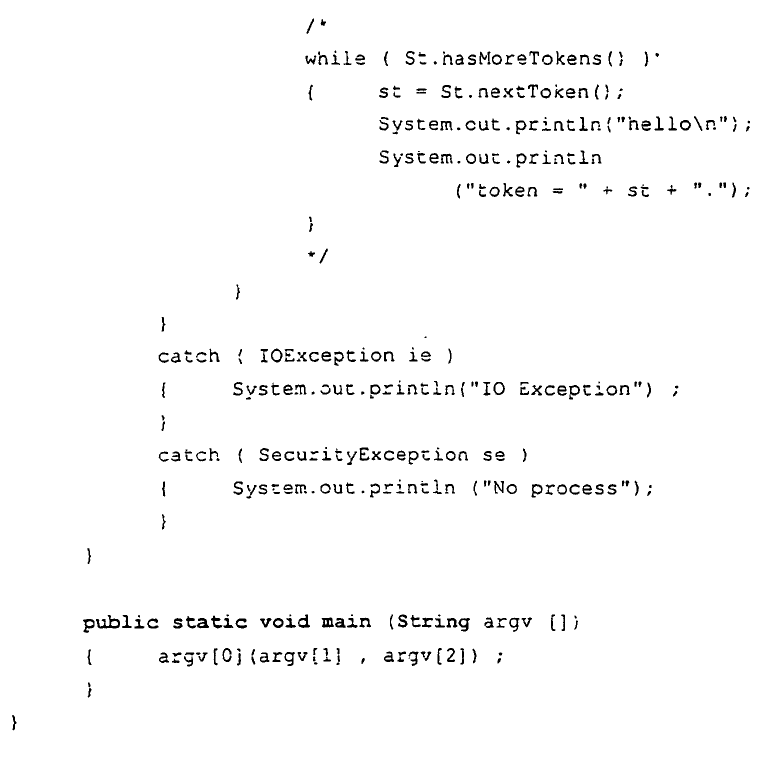

Dans ce code, le mot "br" désigne le résultat de l'exécution de la commande spécifique. Le concepteur C cherche alors l'occurrence de ###### et change 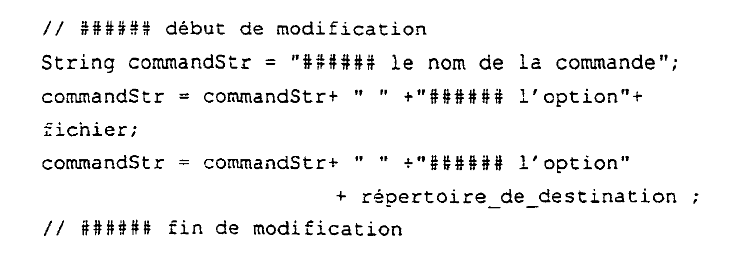 en

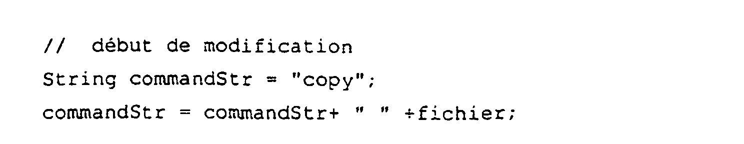

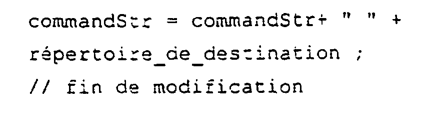

## Revendications

1. Procédé de commande d'une fonction (f) exécutable par divers logiciels (4a, 4b, 6a, 6b) sous des commandes (Pa-Pd) spécifiques aux logiciels respectifs et pouvant avoir chacune au moins une option, les logiciels étant installés dans au moins une machine (2a, 2b) d'un système informatique (10), **caractérisé en ce qu'**il consiste à définir dans une classe abstraite une méthode abstraite pour la fonction (f), la méthode abstraite incluant des paramètres correspondant à l'union, au sens logique, de toutes les options (tableau C) des commandes spécifiques, à définir une commande commune (P0) incluant des symboles arbitraires correspondant aux paramètres de la méthode abstraite, à former au moins un pilote (52) pour implémenter la méthode abstraite dans une machine, et à faire exécuter par le pilote l'une des commandes spécifiques avec des options équivalant aux options de la commande commune.

2. Procédé selon la revendication 1, **caractérisé en ce que** l'équivalence entre les options de la commande spécifique et les options de la commande commune consiste à créer un fichier de configuration (ConfigImpression) définissant les types et les valeurs par défaut des options de chaque commande spécifique pouvant être exécutée par le pilote, et à déterminer les paramètres de l'une de ces commande spécifiques par consultation du fichier de configuration par la commande commune.

3. Procédé selon la revendication 1 ou 2, **caractérisé en ce qu'**il consiste à faire correspondre un pilote (52a) à une machine (2a) du système informatique.

4. Procédé selon l'une des revendications 1 à 3, **caractérisé en ce que** la classe abstraite est la classe la plus abstraite pouvant être définie, telle qu'une interface dans le langage Java®.

5. Procédé selon l'une des revendications 1 à 4, **caractérisé en ce que** la classe abstraite contient tout ou partie des méthodes se rapportant à des fonctions d'une même fonctionnalité (F) commune aux logiciels.

6. Système informatique (10) comprenant au moins un machine disposant de logiciels divers (4a, 4b, 6a, 6b) ayant en commun au moins une fonction (f) exécutable sous des commandes spécifiques (Pa-Pd) aux logiciels respectifs et pouvant avoir chacune au moins une option, **caractérisé en ce qu'**il met en oeuvre le procédé défini par l'une des revendications 1 à 5.

## Patentansprüche

1. Verfahren zum Steuern einer Funktion (f), die von verschiedenen Software-Einheiten (4a, 4b, 6a, 6b) unter Steuerungen (Pa-Pd), die für die jeweiligen Software-Einheiten spezifisch sind und jeweils wenigstens eine Option haben können, ausführbar ist, wobei die Software-Einheiten in wenigstens einer Maschine (2a, 2b) eines Datenverarbeitungssystems (10) installiert sind, **dadurch gekennzeichnet, dass** es darin besteht, in einer abstrakten Klasse eine abstrakte Methode für die Funktion (f) zu definieren, wobei die abstrakte Methode Parameter enthält, die der Vereinigung im logischen Sinn aller Optionen (Tabelle C) der spezifischen Steuerungen entsprechen, eine gemeinsame Steuerung (P0) zu definieren, die beliebige Symbole enthält, die den Parametern der abstrakten Methode entsprechen, wenigstens einen Treiber (52) zu bilden, um die abstrakte Methode in einer Maschine zu implementieren, und durch den Treiber eine der spezifischen Steuerungen mit Optionen, die zu den Optionen der gemeinsamen Steuerung äquivalent sind, auszuführen.

2. Verfahren nach Anspruch 1, **dadurch gekennzeichnet, dass** die Äquivalenz zwischen den Optionen der spezifischen Steuerung und den Optionen der gemeinsamen Steuerung darin besteht, eine Konfigurationsdatei (ConfigImpression) zu erzeugen, die die voreingestellten Typen und Werte der Optionen jeder spezifischen Steuerung, die durch den Treiber ausgeführt werden kann, definiert, und die Parameter einer dieser spezifischen Steuerungen durch Durchsuchen der Konfigurationsdatei durch die gemeinsame Steuerung zu bestimmen.

3. Verfahren nach Anspruch 1 oder 2, **dadurch gekennzeichnet, dass** es darin besteht, eine Entsprechung zwischen einem Treiber (52a) und einer Maschine (2a) des Datenverarbeitungssystems herzustellen.

4. Verfahren nach einem der Ansprüche 1 bis 3, **dadurch gekennzeichnet, dass** die abstrakte Klasse die abstrakteste Klasse ist, die definiert werden kann, etwa eine Schnittstelle in der Java®-Sprache.

5. Verfahren nach einem der Ansprüche 1 bis 4, **dadurch gekennzeichnet, dass** die abstrakte Klasse alle Methoden oder einen Teil der Methoden enthält, die sich auf Funktionen derselben Funktionalität (F), die den Software-Einheiten gemeinsam ist, beziehen.

6. Datenverarbeitungssystem (10), das wenigstens eine Maschine umfasst, in der verschiedene Software-Einheiten (4a, 4b, 6a, 6b) eingerichtet sind, die wenigstens eine Funktion (f) gemeinsam haben, die unter Steuerungen (Pa-Pd), die für die jeweiligen Software-Einheiten spezifisch sind und jeweils wenigstens eine Option haben können, ausführbar ist, **dadurch gekennzeichnet, dass** es das Verfahren, das durch einen der Ansprüche 1 bis 5 definiert ist, ausführt.

## Claims

1. Method of command of a function (f) that can be executed by various pieces of software (4a, 4b, 6a, 6b) under commands (Pa-Pd) specific to the respective software and each being able to have at least one option, the pieces of software being installed in at least one machine (2a, 2b) of an information processing system (10), **characterised in that** it consists in defining, in an abstract class, an abstract method for the function (f), the abstract method including parameters corresponding to the union, in the logical sense, of all the options (table C) of the specific commands, in defining a common command (P0) including arbitrary symbols corresponding to the parameters of the abstract method, in forming at least one driver (52) in order to implement the abstract method in a machine, and in causing the driver to execute one of the specific commands with options equivalent to the options of the common command.

2. Method according to Claim 1, **characterised in that** the equivalence between the options of the specific command and the options of the common command consists in creating a configuration file (Configlmpression) defining the types and default values of the options of each specific command that can be executed by the driver, and in determining the parameters of one of these specific commands by using the common command to consult the configuration file.

3. Method according to Claim 1 or 2, **characterised in that** it consists in causing a driver (52a) to correspond to a machine (2a) of the information processing system.

4. Method according to one of Claims 1 to 3, **characterised in that** the abstract class is the most abstract class that can be defined, such as an interface in the Java® language.

5. Method according to one of Claims 1 to 4, **characterised in that** the abstract class contains all or some of the methods relating to functions of the same functionality (F) common to the software.

6. Information processing system (10) comprising at least one machine that has various pieces of software (4a, 4b, 6a, 6b) having in common at least one function (f) that can be executed under commands (Pa-Pd) specific to the respective pieces of software and each being able to have at least one option, **characterised in that** it implements the method defined by one of Claims 1 to 5.
